# EUROPEAN PATENT APPLICATION

(11) **EP 4 752 676 A1**
(43) Date of publication of application: **03.06.2026**
(21) Application number: 24845795.4
(22) Date of filing: 10.06.2024
(51) Int. Cl.: G06F 1/16

(54) **FLEXIBLE DISPLAY AND ELECTRONIC DEVICE COMPRISING SAME**

(30) Priority: 25.07.2023 KR 20230096518; 04.09.2023 KR 20230117093
(71) Applicant: Samsung Electronics Co., Ltd., Suwon-si, Gyeonggi-do 16677 (KR)
(72) Inventor: KIM, Taejeong, Suwon-si Gyeonggi-do 16677 (KR); PARK, Byounggyu, Suwon-si Gyeonggi-do 16677 (KR); SONG, Kyunghwan, Suwon-si Gyeonggi-do 16677 (KR); KIM, Sanghoon, Suwon-si Gyeonggi-do 16677 (KR); LEE, Garam, Suwon-si Gyeonggi-do 16677 (KR); CHOI, Hyunsuk, Suwon-si Gyeonggi-do 16677 (KR); KIM, Moonsoo, Suwon-si Gyeonggi-do 16677 (KR); HAN, Minho, Suwon-si Gyeonggi-do 16677 (KR); HWANG, Hyunjin, Suwon-si Gyeonggi-do 16677 (KR); SEO, Sungchoul, Suwon-si Gyeonggi-do 16677 (KR)
(74) Representative: Gulde & Partner
(86) International application number: PCT/KR2024/007906
(87) International publication number: WO 2025/023491

(57) **Abstract**

According to an embodiment of the present disclosure, an electronic device, a housing, a flexible display, a multi-bar structure, or a guide rail may be included. The guide rail may include a recess. The recess may be configured to guide movement of the multi-bar structure. At least a portion of the recess may include at least one inclined surface. The at least one inclined surface may be inclined with respect to the inner surface of the guide rail. While the multi-bar structure is positioned on the at least one inclined surface, a force in the direction going from the outer surface of the flexible display toward the inner surface of the flexible display may be applied to the multi-bar structure. Various other embodiments may be possible.

## Description

### [Technical Field]

Various embodiments of the disclosure relate to an electronic device, e.g., a flexible display and an electronic device including the same.

### [Background Art]

Advancing information communication technologies and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling or e-wallet function. These electronic devices have been downsized to be conveniently carried by users.

As mobile communication services extend up to multimedia service sectors, the display of the electronic device may be increased to allow the user satisfactory use of multimedia services as well as voice call or text messaging services.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

According to an embodiment of the disclosure, an electronic device may include a housing, a flexible display, a multi-bar structure, or a guide rail. The housing may include a first housing portion or a second housing portion. The second housing portion may be configured to move between a retracted position and an extended position relative to the first housing portion. The flexible display may be supported by the first housing portion or the second housing portion. The multi-bar structure may be configured to support at least a portion of the flexible display. The multi-bar structure may be attached to the flexible display. The guide rail may be disposed in the housing. The guide rail may include a recess. The recess may be recessed from an inner surface of the guide rail. The recess may be configured to guide a movement of the multi-bar structure. At least a portion of the recess may include at least one inclined surface. The at least one inclined surface may be inclined with respect to the inner surface of the guide rail. While the multi-bar structure is located on the at least one inclined surface, a force in a direction from an outer surface of the flexible display toward an inner surface of the flexible display may be configured to be applied to the multi-bar structure.

According to an embodiment of the disclosure, an electronic device may include a housing, a flexible display, a multi-bar structure, or a guide rail. The housing may include a first housing portion or a second housing portion. The second housing portion may be configured to move between a retracted position and an extended position relative to the first housing portion. The flexible display may be supported by the first housing portion or the second housing portion. The multi-bar structure may be configured to support at least a portion of the flexible display. The multi-bar structure may include a plurality of support bars. The guide rail may be disposed in the housing. The guide rail may be configured to guide a movement of the plurality of support bars. The guide rail may include a first recess or a second recess. The second recess may extend from the first recess. At least a portion of the second recess may be at least partially inclined with respect to at least a portion of the first recess.

### [Brief Description of Drawings]

FIG. 1 is a block diagram illustrating an electronic device in a network environment according to an embodiment.
FIG. 2 is a view illustrating a state in which a second display area of a display is received in a housing according to an embodiment of the disclosure.
FIG. 3 is a view illustrating a state in which a second display area of a display is exposed to the outside of a housing according to an embodiment of the disclosure.
FIG. 4 is an exploded perspective view illustrating an electronic device according to an embodiment of the disclosure.
FIG. 5A is a cross-sectional view taken along line A-A' of FIG. 2 according to an embodiment of the disclosure;
FIG. 5B is a cross-sectional view taken along line B-B' of FIG. 3 according to an embodiment of the disclosure;
FIG. 6 is a cross-sectional view illustrating an electronic device according to an embodiment of the disclosure.
FIG. 7 is a plan view illustrating a guide rail according to an embodiment of the disclosure.
FIG. 8 is a cross-sectional view illustrating a first recess region of a guide rail according to an embodiment of the disclosure.
FIG. 9 is a cross-sectional view illustrating a second recess region of a guide rail according to an embodiment of the disclosure.
FIG. 10 is a plan view illustrating a guide rail and a multi-bar structure according to an embodiment of the disclosure.
FIG. 11 is a cross-sectional perspective view illustrating a support bar according to an embodiment of the disclosure.
FIG. 12 is a side view illustrating a support bar according to an embodiment of the disclosure.
FIG. 13 is a side view illustrating a support bar according to an embodiment of the disclosure.
FIG. 14 is a cross-sectional view illustrating a guide rail and a support bar according to an embodiment of the disclosure.
FIG. 15 is a cross-sectional view illustrating a guide rail and a support bar according to an embodiment of the disclosure.
FIG. 16 is a cross-sectional view illustrating a guide rail and a support bar according to an embodiment of the disclosure.

### [Mode for Carrying out the Invention]

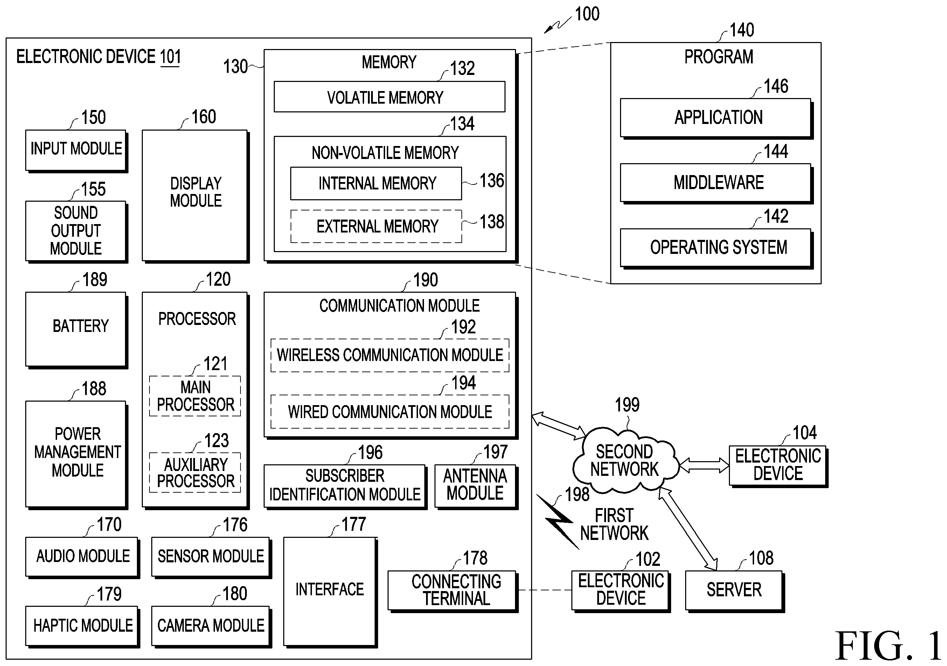

FIG. 1 is a block diagram illustrating an electronic device 101 in a network environment 100, according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

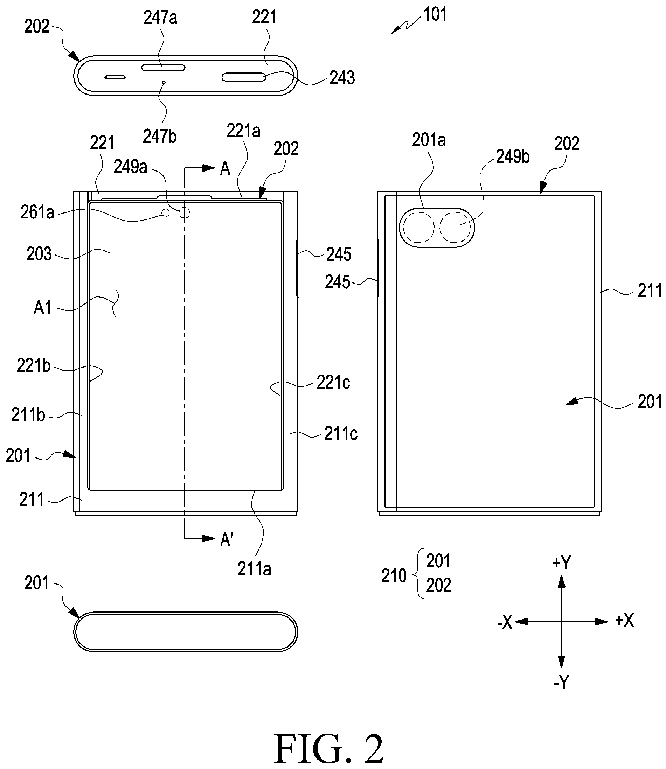

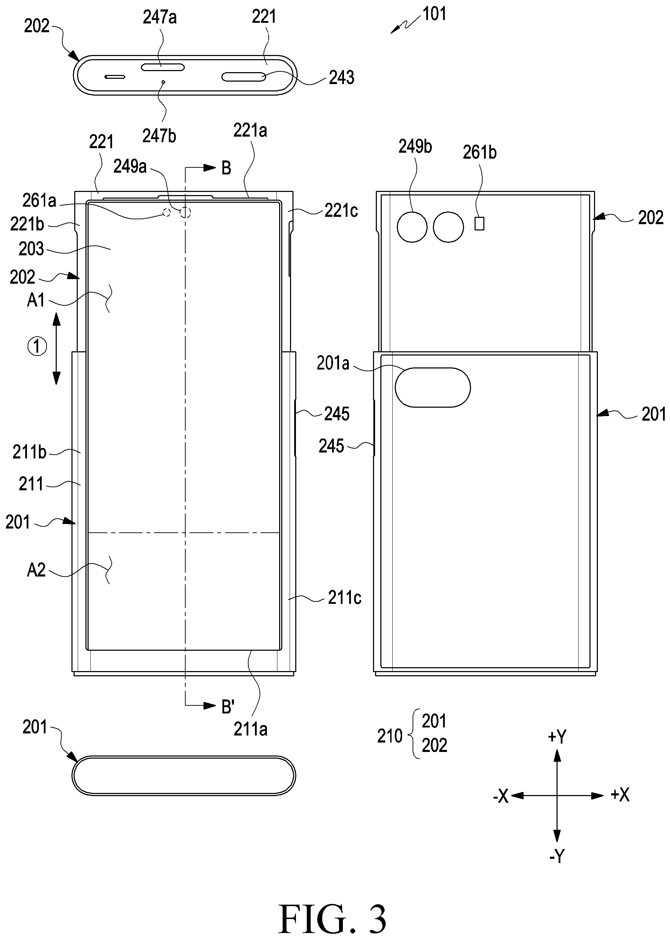

FIG. 2 is a view illustrating a state in which a second display area (e.g., the display area A2 of FIG. 3) of a display is received in a housing according to an embodiment of the disclosure.

FIG. 3 is a view illustrating a state in which a second display area of a display is exposed to the outside of a housing according to an embodiment of the disclosure.

FIGS. 2 and 3 illustrate a structure in which the display 203 (e.g., flexible display or rollable display) is extended in the length direction (e.g., +Y direction) when the electronic device 101 is viewed from the front. However, the extending direction of the display 203 is not limited to one direction (e.g., +Y direction). For example, the extending direction of the display 203 may be changed in design to be extendable in the upper direction (+Y direction), right direction (e.g., +X direction), left direction (e.g., -X direction), and/or lower direction (e.g., -Y direction).

The state illustrated in FIG. 2 may be referred to as a slide-in state of the electronic device 101 or a state in which the second display area A2 of the display 203 is closed.

The state illustrated in FIG. 3 may be referred to as a slide-out state of the electronic device 101 or a state in which the second display area A2 of the display 203 is open.

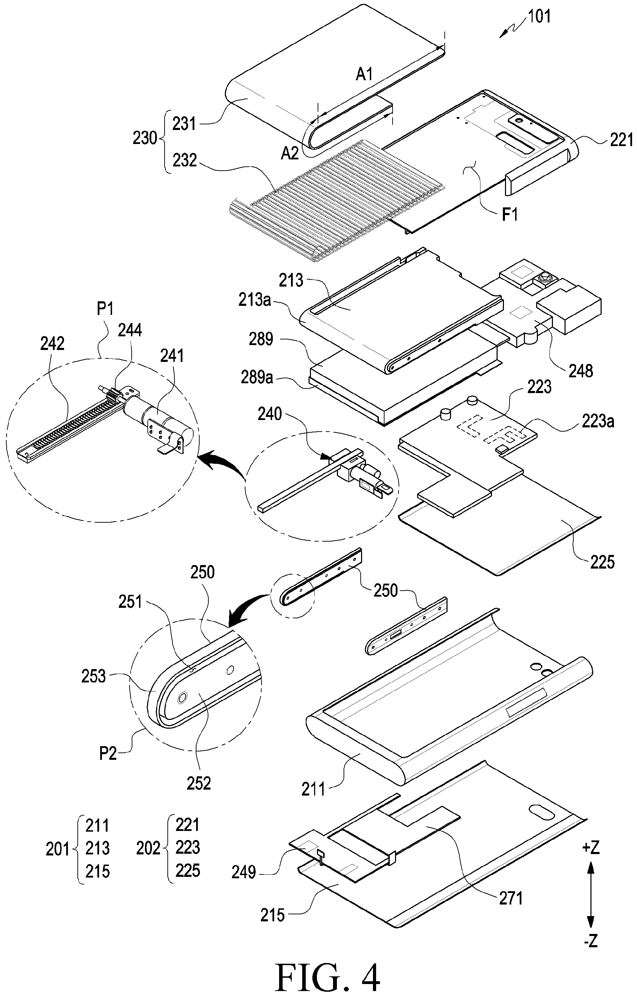

The embodiments of FIGS. 2 and 3 may be combined with the embodiment of FIG. 1 or the embodiments of FIGS. 4 to 16.

Referring to FIGS. 2 and 3, an electronic device 101 (e.g., the electronic device 101 of FIG. 1) may include a housing 210. The housing 210 may include a first housing portion 201 and a second housing portion 202 disposed to be movable relative to the first housing portion 201. According to an embodiment, the electronic device 101 may be interpreted as having a structure in which the first housing portion 201 is disposed to be slidable with respect to the second housing portion 202. According to an embodiment, the second housing portion 202 may be disposed to perform reciprocating motion by a predetermined distance in a predetermined direction with respect to the first housing portion 201, for example, a direction indicated by an arrow ①.

According to an embodiment, the second housing portion 202 may be referred to as a slide portion or a slide housing, and may be movable relative to the first housing portion 201. According to an embodiment, the second housing portion 202 may receive various electrical and electronic components, such as a circuit board or a battery. When the electronic device 101 is in the slide-in state, the second housing portion 202 may be defined as being at a retracted position, and when the electronic device 101 is in the slide-out state, the second housing portion 202 may be defined as being at an extended position. For example, the second housing portion 202 may be configured to move between the retracted position and the extended position with respect to the first housing portion 201.

According to an embodiment, the slide-in state of the electronic device 101 (or the slide-out state of the electronic device 101) may be changed into the slide-out state of the electronic device 101 (or the slide-in state of the electronic device 101) based on a predefined user input. For example, the slide-in state of the electronic device 101 (or the slide-out state of the electronic device 101) may be changed into the slide-out state (or the slide-in state of the electronic device 101) in response to a user input to a physical button exposed through a portion of the first housing portion 201 or a portion of the second housing portion 202. For example, the slide-in state (or the slide-out state of the electronic device 101) may be changed into the slide-out state (or the slide-in state of the electronic device 101) in response to a touch input to an executable object displayed in the screen display area (e.g., the first display area A1). For example, the slide-in state (or the slide-out state of the electronic device 101) may be changed into the slide-out state (or the slide-in state of the electronic device 101) in response to a touch input having a pressing strength of a reference strength or more at a contact point on the screen display area (e.g., the first display area A1). For example, the slide-in state (or the slide-out state of the electronic device 101) may be changed into the slide-out state (or the slide-in state of the electronic device 101) in response to a voice input received through the microphone of the electronic device 101. For example, the slide-in state (or the slide-out state of the electronic device 101) may be changed into the slide-out state (or the slide-in state of the electronic device 101) in response to an external force applied to the first housing portion 201 and/or the second housing portion 202 to move the second housing portion 202 with respect to the first housing portion 201. For example, the slide-in state (or the slide-out state of the electronic device 101) may be changed into the slide-out state (or the slide-in state of the electronic device 101) in response to a user input identified from an external electronic device (e.g., earbuds or a smart watch) connected with the electronic device 101. However, the slide in-out operations of the electronic device 101 are not limited thereto.

According to an embodiment, the first housing portion 201 may receive an actuator (e.g., a motor), a speaker, a sim socket, and/or a sub circuit board electrically connected with a main circuit board. The second housing portion 202 may receive a main circuit board on which electric components, such as an application processor (AP) or a communication processor (CP) are mounted. Alternatively, the second housing portion 202 may receive the actuator, speaker, sim socket, and/or the sub circuit board electrically connected with the main circuit board, and the first housing portion 201 may receive the main circuit board where electrical components, such as an application processor (AP) or a communication processor (CP), are mounted. According to an embodiment, the sub circuit board and the main circuit board may be disposed in the first housing portion 201 or the second housing portion 202.

According to an embodiment, the first housing portion 201 may include a first cover member 211 (e.g., a main case). The first cover member 211 may include a 1-1th sidewall 211a, a 1-2th sidewall 211b extending from the 1-1th sidewall 211a, and a 1-3th sidewall 211c extending from the 1-1th sidewall 211a and substantially parallel to the 1-2th sidewall 211b. According to an embodiment, the 1-2th side wall 211b and the 1-3th side wall 211c may be formed substantially perpendicular to the 1-1th side wall 211a.

According to an embodiment, the 1-1th sidewall 211a, 1-2th sidewall 211b, and 1-3th sidewall 211c of the first cover member 211 may be formed to have an opening in a side surface (e.g., a front surface or front face) to receive (or surround) at least a portion of the second housing portion 202. For example, at least a portion of the second housing portion 202 may be surrounded by the first housing portion 201 and be slid in the direction parallel to the first surface (e.g., the first surface F1 of FIG. 4), e.g., arrow ① direction, while being guided by the first housing portion 201. According to an embodiment, the 1-1th sidewall 211a, the 1-2th sidewall 211b, and/or the 1-3th sidewall 211c of the first cover member 211 may be integrally formed. According to an embodiment, the 1-1th sidewall 211a, the 1-2th sidewall 211b, and/or the 1-3th sidewall 211c of the first cover member 211 may be formed as separate structures and be combined or assembled.

According to an embodiment, the first cover member 211 may be formed to surround at least a portion of the display 203. For example, at least a portion of the display 203 may be formed to be surrounded by the 1-1th sidewall 211a, the 1-2th sidewall 211b, and/or the 1-3th sidewall 211c of the first cover member 211.

According to an embodiment, the second housing portion 202 may include a second cover member 221 (e.g., a slide plate). The second cover member 221 may have a plate shape and include a first surface (e.g., the first surface F1 of FIG. 4) supporting internal components. For example, the second cover member 221 may support at least a portion of the display 203 (e.g., the first display area A1). According to an embodiment, the second cover member 221 may be referred to as a front cover.

According to an embodiment, the second cover member 221 may include a 2-1th sidewall 221a, a 2-2th sidewall 221b extending from the 2-1th sidewall 221a, and a 2-3th sidewall 221c extending from the 2-1th sidewall 221a and substantially parallel to the 2-2th sidewall 221b. According to an embodiment, the 2-2th sidewall 221b and the 2-3th sidewall 221c may be formed substantially perpendicular to the 2-1th sidewall 221a.

According to various embodiments, as the second housing portion 202 moves in a first direction (e.g., direction ①) parallel to the 2-2th sidewall 221b or the 2-3th sidewall 221c, the slide-in state and slide-out state of the electronic device 101 may be formed. In the slide-in state of the electronic device 101, the second housing portion 202 may be positioned at a first distance from the 1-1th sidewall 211a of the first housing portion 201. In the slide-out state of the electronic device 101, the second housing portion 202 may move to be positioned at a second distance larger than the first distance from the 1-1th sidewall 211a of the first housing portion 201. In an embodiment, in the slide-in state of the electronic device 101, the first housing portion 201 may be formed to surround a portion of the 2-2th sidewall 221b and the 2-3th sidewall 221c.

According to an embodiment, the electronic device 101 may have an intermediate state between the slide-in state (e.g., fully closed state) of FIG. 2 and the slide-out state (e.g., fully open state) of FIG. 3. The distance between the 1-1th sidewall 211a and the 2-1th sidewall 221a in the intermediate state of the electronic device 101 may be shorter than the distance between the 1-1th sidewall 211a and the 2-1th sidewall 221a of the electronic device 101 in the fully open state and be longer than the distance between the 1-1th sidewall 211a and the 2-1th sidewall 221a of the electronic device 101 in the fully closed state. According to an embodiment, as at least a portion of the display 203 slides in the intermediate state of the electronic device 101, the area exposed to the outside may vary. For example, in the intermediate state of the electronic device 101, the ratio of the width (length in the X direction) to the height (length in the Y direction) of the display 203 and/or the distance between the 1-1th sidewall 211a and the 2-1th sidewall 221a may be changed based on the slide of the electronic device 101.

According to an embodiment, the electronic device 101 may include a display 203, a key input device 245, a connector hole 243, audio modules 247a, 247b, or camera modules 249a, 249b. According to an embodiment, the electronic device 101 may further include an indicator (e.g., a light emitting diode (LED) device) or various sensor modules.

According to an embodiment, the display 203 may be formed so that the size of a portion of the housing 210, which may be viewed from the front, is changed based on the slide of the second housing portion 202. According to an embodiment, the display 203 may include a first display area A1 and a second display area A2 configured to be exposed to the outside of the electronic device 101 based on the slide of the second housing portion 202.

According to an embodiment, the first display area A1 may be disposed on the second housing portion 202. For example, the first display area A1 may be disposed on the second cover member 221 of the second housing portion 202. According to an embodiment, the second display area A2 may extend from the first display area A1, and the second display area A2 may be received in, or visually exposed to the outside of, the first housing portion 201 as the second housing portion 202 slides relative to the first housing portion 201. According to an embodiment, as the electronic device 101 changes from the slide-in state to slide-out state, the display 203 may extend in the lower direction (e.g., -Y direction) of the electronic device 101. For example, in the slide-out state of the electronic device 101, the second display area A2 may be visually exposed under the display 203 (e.g., in the -Y direction). According to an embodiment, as the electronic device 101 changes from the slide-in state to slide-out state, the display 203 may extend in the upper direction (e.g., +Y direction) of the electronic device 101. For example, in the slide-out state of the electronic device 101, the second display area A2 may be visually exposed above the display 203 (e.g., in the +Y direction).

According to an embodiment, the second display area A2 may be received in the space positioned inside the first housing portion 201 or exposed to the outside of the electronic device while being substantially guided by one area (e.g., the curved surface 213a of FIG. 4) of the first housing portion 201. According to an embodiment, the second display area A2 may move based on a slide of the second housing portion 202 in the first direction (e.g., the direction indicated by the arrow ①). For example, while the second housing portion 202 slides, a portion of the second display area A2 may be deformed into a curved shape in a position corresponding to the curved surface 213a of the first housing portion 201.

According to an embodiment, as viewed from above the second cover member 221 (e.g., front cover), if the electronic device 101 changes from the slide-in state to slide-out state (e.g., if the second housing portion 202 slides to extend from the first housing portion 201), the second display area A2 may be gradually exposed to the outside of the first housing portion 201 and, together with the first display area A1, form a substantially flat surface. According to an embodiment, the display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the slide-in state or slide-out state of the electronic device 101, the exposed portion of the second display area A2 may be positioned on a portion (e.g., the curved surface 213a of FIG. 4) of the first housing portion, and a portion of the second display area A2 may remain in the curved shape in the position corresponding to the curved surface 213a.

According to an embodiment, the key input device 245 may be positioned in an area of the housing 210 (e.g., the first housing portion 201 and/or second housing portion 202). Depending on the appearance and usage state, the electronic device 101 may be designed such that the illustrated key input device 245 is omitted or includes additional key input device(s). According to an embodiment, the electronic device 101 may include a key input device (not shown), e.g., a home key button or a touchpad disposed around the home key button. According to an embodiment, at least a portion of the key input device 245 may be disposed on the 1-1th sidewall 211a, the 1-2th sidewall 211b, or the 1-3th sidewall 211c of the first housing portion 201. According to an embodiment, at least a portion of the key input device 245 may be disposed on the 2-1th sidewall 221a, the 2-2th sidewall 221b, and/or the 2-3th sidewall 221c of the second housing portion 202.

According to an embodiment, the connector hole 243 may be omitted or may accommodate a connector (e.g., a universal serial bus (USB) connector) for transmitting and receiving power and/or data with an external electronic device. According to an embodiment (not shown), the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the second housing portion 202, but is not limited thereto. For example, the connector hole 243 or a connector hole not shown may be disposed in the first housing portion 201.

According to an embodiment, the audio modules 247a, 247b may include at least one speaker hole 247a or at least one microphone hole 247b. One of the speaker holes 247a may be provided as a receiver hole for voice calls, and another may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker). According to an embodiment, the speaker hole 247a and the microphone hole 247b may be positioned in the first housing portion 201 and/or the second housing portion 202.

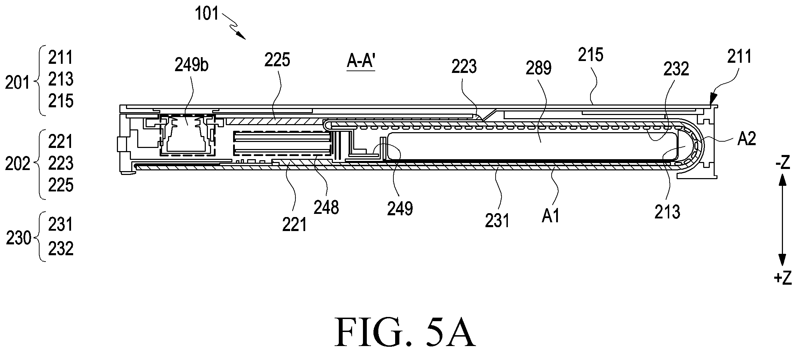

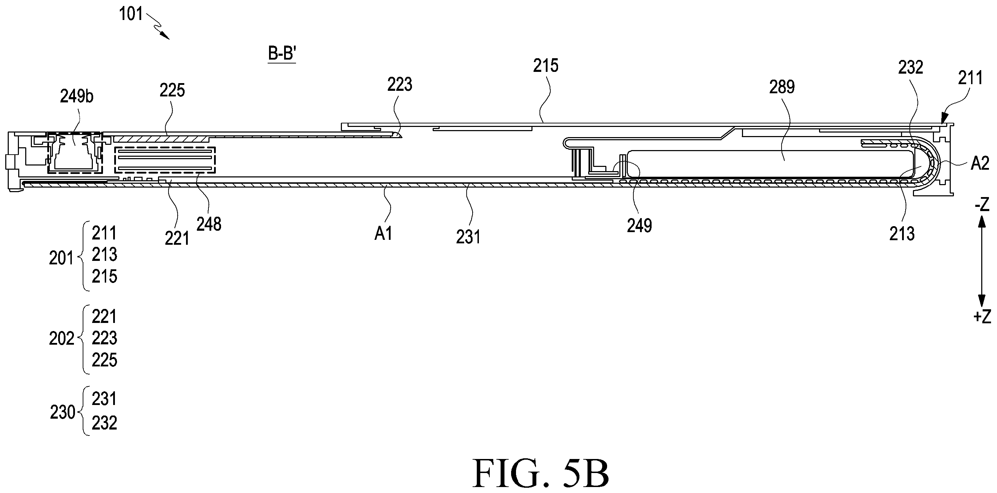

According to an embodiment, the camera modules 249a, 249b may include a first camera module 249a (e.g., a front camera) and a second camera module 249b (e.g., a rear camera) (e.g., the second camera module 249b of FIGS. 5A and 5B). According to an embodiment, the electronic device 101 may include at least one of a wide-angle camera, a telephoto camera, or a close-up camera. According to an embodiment, the electronic device 101 may measure the distance to the subject by including an infrared projector and/or an infrared receiver. The camera modules 249a, 249b may include one or more lenses, an image sensor, and/or an image signal processor. The first camera module 249a may be disposed to face in the same direction as the display 203. For example, the first camera module 249a may be disposed in an area around the first display area A1 or overlapping the display 203. When disposed in the area overlapping the display 203, the first camera module 249a may capture the subject through the display 203. According to an embodiment, the first camera module 249a may not be visually exposed to a screen display area (e.g., the first display area A1) and may include an under display camera (UDC). According to an embodiment, the second camera module 249b may capture the subject in a direction opposite to the first display area A1. According to an embodiment, the first camera module 249a and/or the second camera module 249b may be disposed on the second housing portion 202. According to an embodiment, a plurality of second camera modules 249b may be formed to provide various arrays. For example, the plurality of second camera modules 249b may be arranged along a width direction (X-axis direction) that is substantially perpendicular to the sliding direction (e.g., Y-axis direction) of the electronic device 101. As another example, the plurality of second camera modules 249b may be arranged along the sliding direction (e.g., Y-axis direction) of the electronic device 101. As another example, the plurality of second camera modules 249b may be arranged along N * M rows and columns like a matrix.

According to an embodiment, the second camera module 249b is not visually exposed to the outside of the electronic device 101 in the slide-in state of the electronic device 101 and, in the slide-out state of the electronic device 101, may capture the outside of the electronic device 101. According to an embodiment, the second camera module 249b may capture the outside of the electronic device 101 in the slide-in state and/or slide-out state of the electronic device 101. For example, at least a portion (e.g., the first rear plate 215 and/or the second rear plate 225 of FIG. 4) of the housing 210 may be substantially transparent. The second camera module 249b may capture the outside of the electronic device 101 through the first rear plate 215 and/or the second rear plate 225. According to an embodiment, the second camera module 249b may be visually exposed to the outside of the electronic device 101 to capture the outside of the electronic device 101 in the slide-in state and slide-out state of the electronic device 101. For example, the first housing portion 201 (e.g., the first rear plate 215 of FIG. 4) may include an opening 201a for the second camera module 249b.

According to an embodiment, an indicator (not shown) of the electronic device 101 may be disposed on the first housing portion 201 or the second housing portion 202, and the indicator may include a light emitting diode to provide state information about the electronic device 101 as a visual signal. The sensor module 261a or 261b of the electronic device 101 may produce an electrical signal or data value corresponding to the internal operation state or external environment state of the electronic device. The sensor module 261a or 261b may include a proximity sensor, a fingerprint sensor, and/or a biometric sensor (e.g., an iris/face recognition sensor or a heartrate monitor (HRM) sensor). According to an embodiment, the sensor module 261a or 261b may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. According to an embodiment, the sensor module 261a or 261b may be disposed in the first housing portion 201 and/or the second housing portion 202. The sensor modules 261a, 261b may include a first sensor module 261a (e.g., proximity sensor or illuminance sensor) disposed on the front surface of the electronic device 101 and/or a second sensor module 261b (e.g., heart rate monitoring (HRM) sensor) disposed on the rear surface of the electronic device 101.

FIG. 4 is an exploded perspective view illustrating an electronic device according to an embodiment of the disclosure.
FIG. 5A is a cross-sectional view taken along line A-A' of FIG. 2 according to an embodiment of the disclosure;
FIG. 5B is a cross-sectional view taken along line B-B' of FIG. 3 according to an embodiment of the disclosure;
Referring to FIG. 4, FIG. 5A, and/or FIG. 5B, an electronic device 101 (e.g., the electronic device 101 of FIGS. 1 to 3) may include a first housing portion 201, a second housing portion 202, a display assembly 230, and a driving structure 240. The configuration of the first housing portion 201, the second housing portion 202, and the display assembly 230 of FIGS. 4, 5A, and/or 5B may be identical in whole or part to the configuration of the first housing portion 201, the second housing portion 202, and the display 203 of FIGS. 2 and/or 3.

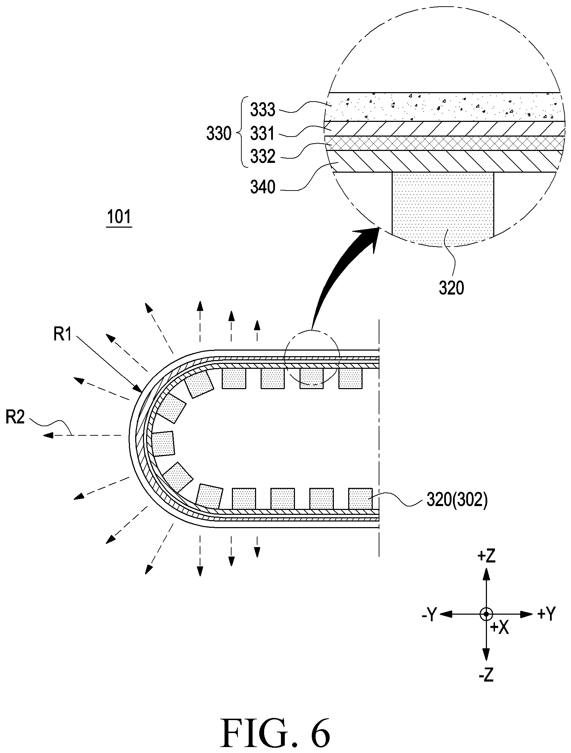

The embodiments of FIGS. 4 to 5B may be combined with the embodiments of FIGS. 1 to 3, or the embodiments of FIGS. 6 to 16.

According to an embodiment, the first housing portion 201 may include a first cover member 211 (e.g., the first cover member 211 of FIGS. 2 and 3), a frame 213, and a first rear plate 215.

According to an embodiment, the first cover member 211 may accommodate at least a portion of the frame 213 and accommodate a component (e.g., battery 289) positioned in the frame 213. According to an embodiment, the first cover member 211 may be formed to surround at least a portion of the second housing portion 202. According to an embodiment, the first cover member 211 may protect the components (e.g., the second circuit board 249 and the frame 213) positioned in the first housing portion 201 from external impact. According to an embodiment, the second circuit board 249 electrically connected with an electric component (e.g., an actuator, a speaker, a sim socket, and/or the first circuit board 248) may be connected to the first cover member 211.

According to an embodiment, the frame 213 may be connected to the first cover member 211. For example, the frame 213 may be connected to the first cover member 211, and the second housing portion 202 is movable relative to the first cover member 211 and/or the frame 213. According to an embodiment, the frame 213 may accommodate the battery 289. For example, the frame 213 may include a recess for receiving the battery 289. The frame 213 may be connected to the battery cover 289a and, together with the battery cover 289a, may surround at least a portion of the battery 289. According to an embodiment, the frame 213 may include a curved surface 213a facing the display assembly 230.

According to an embodiment, the first rear plate 215 may substantially form at least a portion of the exterior of the first housing portion 201 or the electronic device 101. For example, the first rear plate 215 may be coupled to the outer surface of the first cover member 211. According to an embodiment, the first rear plate 215 may provide a decorative effect on the exterior of the electronic device 101. The first rear plate 215 may be formed of at least one of metal, glass, synthetic resin, or ceramic.

According to an embodiment, the second housing portion 202 may include a second cover member 221 (e.g., the second cover member 221 of FIGS. 2 and 3), a rear cover 223, and a second rear plate 225.

According to an embodiment, the second cover member 221 may be connected to the first housing portion 201 through the guide rail 250 and, while being guided by the guide rail 250, reciprocate linearly in one direction (e.g., the direction of arrow ①) in FIG. 3).

According to an embodiment, the second cover member 221 may support at least a portion of the display 231. For example, the second cover member 221 may include a first surface F1. The first display area A1 of the display 231 may be substantially positioned on the first surface F1 to maintain a flat panel shape. According to an embodiment, the second cover member 221 may be formed of a metal material and/or a non-metal (e.g., polymer) material. According to an embodiment, the first circuit board 248 accommodating the electronic component (e.g., the processor 120 and/or the memory 130 of FIG. 1) may be connected to the second cover member 221. According to an embodiment, the second cover member 221 may protect the components (e.g., the first circuit board 248 and the rear cover 223) positioned in the second housing portion 202 from external impact.

According to an embodiment, the rear cover 223 may protect a component (e.g., the first circuit board 248) positioned on the second cover member 221. For example, the rear cover 223 may be connected to the second cover member 221 and may be formed to surround at least a portion of the first circuit board 248. According to an embodiment, the rear cover 223 may include an antenna pattern (e.g., at least one antenna element 223a) for communicating with an external electronic device. For example, when the rear cover 223 is formed of an injection molded product (e.g., an antenna carrier) of a dielectric material, the at least one antenna element 223a may be disposed on an outer surface (e.g., one surface facing in the -Z-axis direction) of the rear cover 223. For example, the at least one antenna element 223a may include a laser direct structuring (LDS) antenna pattern formed on the outer surface of the rear cover 223. For example, the at least one antenna element 223a may be formed to be embedded when the rear cover 223 is injection-molded. For example, the at least one antenna element 223a may be configured to transmit or receive wireless signals in a designated frequency band (e.g., a legacy band) by electrically connecting with a wireless communication circuit (e.g., the wireless communication module 192 of FIG. 1) disposed on the first circuit board 248.

According to an embodiment, the second rear plate 225 may substantially form at least a portion of the exterior of the second housing portion 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 225 may be formed of at least one of metal, glass, synthetic resin, or ceramic.

According to an embodiment, the display assembly 230 may include a display 231 (e.g., the display 203 of FIGS. 2 and/or 3) and a multi-bar structure 232 supporting the display 231. According to an embodiment, the display 231 may be referred to as a flexible display, a foldable display, and/or a rollable display. According to an embodiment, the first display area A1 of the display 231 may be supported by a rigid body. The second display area A2 may be supported by a bendable structure. For example, the first display area A1 may be supported by the first surface F1 of the second cover member 221 or a plate (not shown). The second display area A2 may be supported by the multi-bar structure 232.

According to an embodiment, the multi-bar structure 232 may be connected to or attached to at least a portion (e.g., the second display area A2) of the display 231. According to an embodiment, as the second housing portion 202 slides, the multi-bar structure 232 may move with respect to the first housing portion 201. In the slide-in state of the electronic device 101 (e.g., FIG. 2), the multi-bar structure 232 may be mostly received in the first housing portion 201 and may be positioned between the first cover member 211 and the second cover member 221. According to an embodiment, at least a portion of the multi-bar structure 232 may move corresponding to the curved surface 213a positioned at the edge of the frame 213. According to an embodiment, the multi-bar structure 232 may be referred to as a display supporting member or supporting structure and may be in the form of one elastic plate.

According to an embodiment, the driving structure 240 may move the second housing portion 202 relative to the first housing portion 201. For example, the driving structure 240 may include an actuator 241 configured to generate a driving force for sliding the second housing portion 202 with respect to the first housing portion 201. The driving structure 240 may include a gear 244 (e.g., a pinion) connected to the actuator 241 and a rack 242 configured to mesh with the gear. FIG. 4 illustrates components (e.g., the actuator 241, the rack 242, and the gear 244) of the driving structure 240 inverted (e.g., facing in the -Z-axis direction) in the circle P1.

According to an embodiment, the housing in which the rack 242 is positioned and the housing in which the actuator 241 is positioned may be different. According to an embodiment, the actuator 241 may be connected to the first housing portion 201, and the rack 242 may be connected to the second housing portion 202. According to an embodiment, the actuator 241 may be connected to the second housing portion 202, and the rack 242 may be connected to the first housing portion 201.

According to an embodiment, the actuator 241 may be controlled by a processor (e.g., the processor 120 of FIG. 1). For example, the processor 120 may include an actuator driver driving circuit and transfer a pulse width modulation (PWM) signal for controlling the speed of the actuator 241 and/or the torque of the actuator 241 to the actuator 241. According to an embodiment, the actuator 241 may be electrically coupled to a processor (e.g., the processor 120 of FIG. 1) positioned on the circuit board (e.g., the first circuit board 248 of FIG. 4) using a flexible printed circuit board.

According to an embodiment, the second housing portion 202 may receive the first circuit board 248 (e.g., a main board). According to an embodiment, the processor, memory, and/or interface may be mounted on the first circuit board 248. The processor may include one or more of, e.g., a central processing unit, an application processor, a graphic processing device, an image signal processor, a sensor hub processor, or a communication processor. According to various embodiments, the first circuit board 248 may include a flexible printed circuit board type radio frequency cable (FRC). The first circuit board 248 may be disposed on at least a portion of the second cover member 221 and may be electrically connected with an antenna module (e.g., the antenna module 197 of FIG. 1) and a communication module (e.g., the communication module 190 of FIG. 1).

According to an embodiment, memory may include, e.g., a volatile memory or a non-volatile memory.

According to an embodiment, the interface may include, e.g., a high definition multimedia interface (HDMI), a universal serial bus (USB) interface, a secure digital (SD) card interface, and/or an audio interface. The interface may, e.g., electrically or physically connect the electronic device 101 to an external electronic device, and may include a USB connector, an SD card/MMC connector, or an audio connector.

According to an embodiment, the electronic device 101 may include a second circuit board 249 (e.g., a sub circuit board) spaced apart from the first circuit board 248 (e.g., a main circuit board) in the first housing portion 201. The second circuit board 249 may be electrically connected to the first circuit board 248 through a flexible board. The second circuit board 249 may be electrically connected with electric components disposed in an end area of the electronic device 101, such as the battery 289 or a speaker and/or a sim socket, and may transfer signals and power. According to an embodiment, the sub circuit board 249 may receive the antenna member 271 (e.g., a coil) or connect with the antenna member 271. The antenna member 271 may include a wireless charging antenna for a wireless charging function, a near field communication (NFC) antenna for an NFC function, and/or a multi-function coil (MFC) antenna including a magnetic secure transmission (MST) antenna for performing an electronic payment function. For example, the battery 289 may receive power from an external electronic device using the antenna member 271 for wireless charging. As another example, the battery 289 may transfer power to the external electronic device using the antenna member 271 for wireless charging.

According to an embodiment, the battery 289 may be a device for supplying power to at least one component of the electronic device 101, and may include a primary cell which is not rechargeable, a secondary cell which is rechargeable, or a fuel cell. The battery 289 may be integrally disposed within the electronic device 101 or may be disposed detachably from the electronic device 101. According to an embodiment, the battery 289 may be formed of a single embedded battery or may include a plurality of removable batteries. According to various embodiments, the battery 289 may be positioned on the frame 213. For example, the battery 289 may be surrounded by the frame 213 and the battery cover 289a. According to an embodiment, it may be positioned within the second housing portion 202 and is slidable along with the second housing portion 202.

According to an embodiment, the guide rail 250 may guide the movement of the multi-bar structure 232. For example, the multi-bar structure 232 may slide along the slit 251 formed in the guide rail 250. According to an embodiment, the guide rail 250 may be connected to the first housing portion 201. For example, the guide rail 250 may be connected to the first cover member 211 and/or the frame 213. According to an embodiment, the slit 251 may be referred to as a groove or recess formed in the inner surface of the guide rail 250. FIG. 4 illustrates an enlarged guide rail 250 in the circle P2.

According to an embodiment, the guide rail 250 may provide a force to the multi-bar structure 232 based on the driving of the actuator 241.

According to an embodiment, when the electronic device 101 changes from the slide-in state to the slide-out state, at least a portion of the second housing portion 202 may slide to be exposed to the outside from the first housing portion 201 through driving of the actuator 241. For example, the gear 244 may rotate in a first rotation direction based on the driving of the actuator 241. As the rack 242 is fixed on the second cover member 221 of the second housing portion 202, the second housing portion 202 may slide to be exposed to the outside of the first housing portion 201 based on the sliding movement of the rack 242 toward the slide-out direction.

According to an embodiment, when the electronic device 101 changes from the slide-in state to the slide-out state, the inner portion 252 of the guide rail 250 may provide a force to the multi-bar structure 232. The multi-bar structure 232 provided with the force may move along the slit 251 of the guide rail 250, and the second housing portion 202 may slide to extend with respect to the first housing portion 201. At least a portion of the display assembly 230 that was received between the first cover member 211 and the frame 213 may extend to the front.

According to an embodiment, when the electronic device 101 changes from the slide-out state to the slide-in state, at least a portion of the second housing portion 202 may slide to be inserted into the first housing portion 201 through driving of the actuator 241. For example, the gear 244 may rotate in a second rotation direction opposite to the first rotation direction based on the driving of the actuator 241. As the rack 242 is fixed on the second cover member 221 of the second housing portion 202, the second housing portion 202 may slide to enter the first housing portion 201 based on the sliding movement of the rack 242 toward the slide-in direction.

According to an embodiment, when the electronic device 101 changes from the slide-out state to the slide-in state, the outer portion 253 of the guide rail 250 may provide a force to the bent multi-bar structure 232. The multi-bar structure 232 receiving the force may be moved along the slit 251 of the guide rail 250, and at least a portion of the second housing portion 202 may be slid to be received in the first housing portion 201. At least a portion of the display assembly 230 may be accommodated between the first cover member 211 and the frame 213.

According to an embodiment, the electronic device 101 may be configured to stop in a designated intermediate state between the slide-in state and the slide-out state by controlling driving of the actuator 241 (free stop function). According to an embodiment, the electronic device 101 may be changed to the slide-in state, the intermediate state, or the slide-out state through the user's manipulation in the state in which the driving force is not provided to the actuator 241.

Referring to FIG. 5A, in the slide-in state of the electronic device 101, at least a portion of the second housing portion 202 may be disposed to be accommodated in the first housing portion 201. As the second housing portion 202 is disposed to be accommodated in the first housing portion 201, the overall volume of the electronic device 101 may be reduced. According to an embodiment, when the second housing portion 202 is received in the first housing portion 201, the size of the display 231 visually exposed may be minimized. For example, when the second housing portion 202 is fully accommodated in the first housing portion 201, the first display area A1 of the display 231 may be visually exposed, and at least a portion (e.g., a portion facing in the -Z axis) of the second display area A2 may be disposed between the battery 289 and the first rear plate 215.

Referring to FIG. 5B, in the slide-out state of the electronic device 101, at least a portion of the second housing portion 202 may protrude from the first housing portion 201. As the second housing portion 202 protrudes from the first housing portion 201, the overall volume of the electronic device 101 may increase. According to an embodiment, when the second housing portion 202 protrudes from the first housing portion 201, at least a portion of the second display area A2 of the display 231 may be visually exposed to the outside of the electronic device 101 together with the first display area A1.

FIG. 6 is a cross-sectional view illustrating an electronic device according to an embodiment of the disclosure.

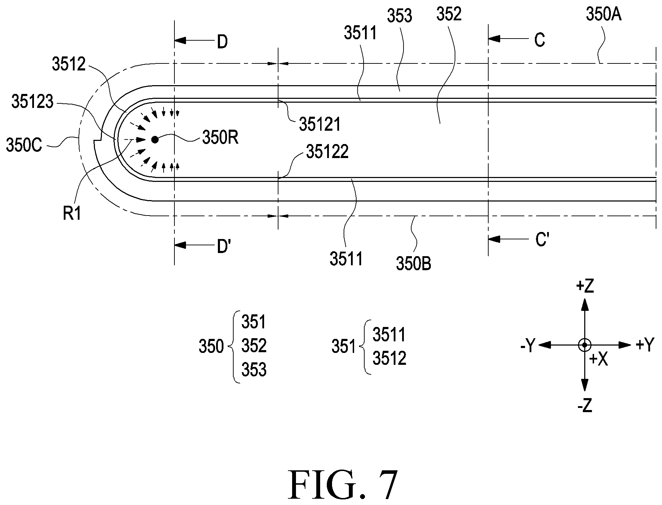

The embodiment of FIG. 6 may be combined with the embodiments of FIGS. 1 to 5 or the embodiments of FIGS. 7 to 16.

Referring to FIG. 6, an electronic device 101 (e.g., the electronic device 101 of FIG. 1, or the electronic device 101 of FIGS. 2 to 5B) may include a multi-bar structure 302, a display 330, or a lattice plate 340.

The configuration of the multi-bar structure 302 of FIG. 6 may be identical in whole or part to the configuration of the multi-bar structure 232 of FIGS. 4 to 5B. The configuration of the display 330 of FIG. 6 may be identical in whole or part to the configuration of the display 203 of FIGS. 2 to 3, or the display 231 of FIGS. 4 to 5B.

According to an embodiment, the multi-bar structure 302 may include a plurality of support bars 320. Each of the plurality of support bars 320 may be coupled or attached to an inner surface (e.g., a surface facing an interior of the electronic device 101) of the display 330. For example, each of the plurality of support bars 320 may be connected or attached to at least a portion of the display 330 (e.g., the second display area A2 of FIGS. 2 to 5B).

According to an embodiment, as the second housing portion (e.g., the second housing portion 202 of FIGS. 2 to 5B) moves relative to the first housing portion (e.g., the first housing portion 201 of FIGS. 2 to 5B), the multi-bar structure 302 may move relative to the first housing portion 201. For example, the multi-bar structure 302 may move corresponding to the curved surface (e.g., the curved surface 213a of FIG. 4) of the frame (e.g., the frame 213 of FIG. 4).

According to an embodiment, each of the plurality of support bars 320 may be spaced apart from each other by a designated interval (or a predetermined interval). For example, each of the plurality of support bars 320 may be configured to support the display 330. For example, the plurality of support bars 320 may be provided in a spaced-apart structure to support a bent portion of the display 330 as well. The bent portion of the display 330 may be at least a portion of the second display area A2, which is supported by the curved surface 213a.

According to an embodiment, each of the plurality of support bars 320 may extend in a width direction (e.g., the X-axis direction of FIGS. 2 to 6) of the electronic device 101. Further, each of the plurality of support bars 320 may move along a slit (e.g., the slit 251 of FIG. 4, or the recess 351 of FIGS. 7 to 10) of the guide rail (e.g., the guide rail 250 of FIG. 4, or the guide rail 350 of FIGS. 7 to 10).

According to an embodiment, the display 330 may include a display panel 331, a cover panel 332, or a transparent window 333. The display panel 331 may be electrically connected to a display driver integrated circuit (DDI) and may be configured to output a visual image to a front side of the electronic device 101.

According to an embodiment, the cover panel 332 may be stacked on an inner surface (e.g., a surface facing the interior of the electronic device 101) of the display panel 331. For example, the cover panel 332 may be disposed on the inner surface of the display panel 331. The cover panel 332 may be configured to protect the inner surface of the display panel 331. For example, by blocking the lattice plate 340 or the multi-bar structure 302 from directly contacting the inner surface of the display panel 331, the cover panel 332 may limit or reduce damage to the inner surface of the display panel 331 or electrical/electronic components disposed on (or mounted on) the inner surface of the display panel 331.

According to an embodiment, the cover panel 332 may include a bendable material (e.g., a bendable metallic material or a non-metallic material). For example, when the display panel 331 is at least partially bent or at least partially unfolded, the cover panel 332 may be bent or unfolded corresponding to a shape of the display panel 331.

According to an embodiment, the transparent window 333 may be stacked on an outer surface (e.g., a surface facing an exterior of the electronic device 101) of the display panel 331. For example, the transparent window 333 may be disposed on the outer surface of the display panel 331. The transparent window 333 may be configured to protect the display panel 331 from external impact. The transparent window 333 may be referred to as a cover window.

According to an embodiment, the transparent window 333 may be formed of a substantially transparent and flexible member. For example, the transparent window 333 may include an at least partially bendable ultra-thin glass (UTG), optical clear resin (OCR), or polyester film (PET film).

According to an embodiment, the lattice plate 340 may be disposed between the display 330 and the multi-bar structure 302. According to an embodiment, the lattice plate 340 may be stacked on, bonded to, or connected to the cover panel 332 of the display 330. The lattice plate 340 may be configured to support the display 330. Further, the lattice plate 340 may provide a force that causes at least a portion of the display 330 exposed to an exterior of the housing (e.g., the housing 210 of FIGS. 2 to 3) to become flat (or a force that maintains flatness). The lattice plate 340 may include a lattice pattern formed in at least a portion of the lattice plate 340. The lattice pattern may be formed in at least a portion (or a lattice region) of the lattice plate corresponding to the second display area A2. For example, at least a portion of the lattice plate in which the lattice pattern is formed may be defined and/or referred to as a lattice region. The lattice pattern may include at least one hole formed through a portion of the lattice plate 340, or at least one groove (or recess) formed by being recessed in a portion of the lattice plate 340. The lattice region may provide flexibility to the lattice plate 340. For example, a portion of the lattice plate 340 may be deformed into a curved shape at a position corresponding to the curved surface 213a of the frame 213. The lattice plate 340 may include a bendable metallic material, but the disclosure is not limited thereto.

According to an embodiment, the second display area A2 of the display 330 may be at least partially bent when located at a position corresponding to the curved surface 213a of the frame 213. For example, at least a portion of the second display area A2 of the display 330 may be deformed into a curved shape to correspond to the curved surface 213a. When at least a portion of the display 330 located on the curved surface 213a is deformed into a curved shape, a repulsive force may act on at least a portion of the display 330. For example, the repulsive force may be a force acting in a direction away from the curved surface 213a when at least a portion of the display 330 moves while forming a curved surface on the curved surface 213a. For example, the repulsive force may act in a direction from an inner surface of the display 330 toward an outer surface of the display 330. The direction from the inner surface of the display 330 toward the outer surface of the display 330 may be the illustrated R2 direction, which is a direction toward the exterior of the electronic device 101. The direction from the inner surface of the display 330 toward the outer surface of the display 330 may be defined and/or referred to as a second direction R2. If the repulsive force acts on at least a portion of the display 330, a deformation in which the display 330 moves away from the curved surface 213a may occur, and the display 330 may be damaged or a distortion phenomenon of the visual image provided from the display 330 may occur.

According to an embodiment, the multi-bar structure 302 may be configured to offset the above-described repulsive force of the display 330 based on a force provided from at least a portion of the guide rail 350. The force that offsets the repulsive force of the display 330 may act in a direction from the outer surface of the display 330 toward the inner surface of the display 330. The direction from the outer surface of the display 330 toward the inner surface of the display 330 may be the illustrated R1 direction, which is a direction toward the interior of the electronic device 101. The direction from the outer surface of the display 330 toward the inner surface of the display 330 may be defined and/or referred to as a first direction R1. The first direction R1 may be a direction opposite to the second direction R2.

FIG. 7 is a plan view illustrating a guide rail according to an embodiment of the disclosure.

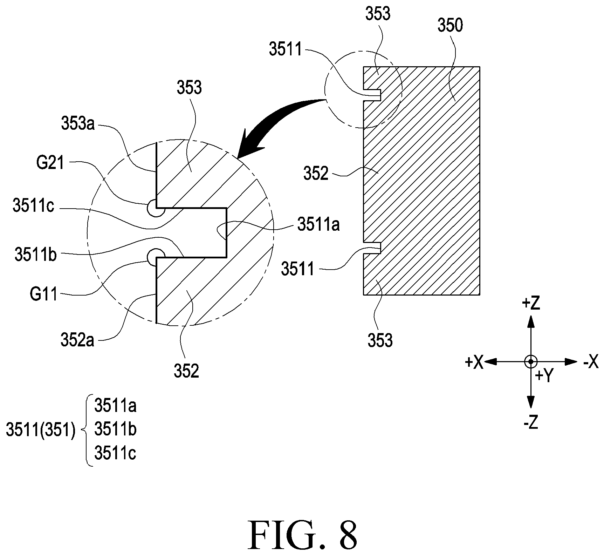

FIG. 8 is a cross-sectional view illustrating a first recess region of a guide rail according to an embodiment of the disclosure.

FIG. 8 is a cross-sectional view taken along line C-C' of FIG. 7.

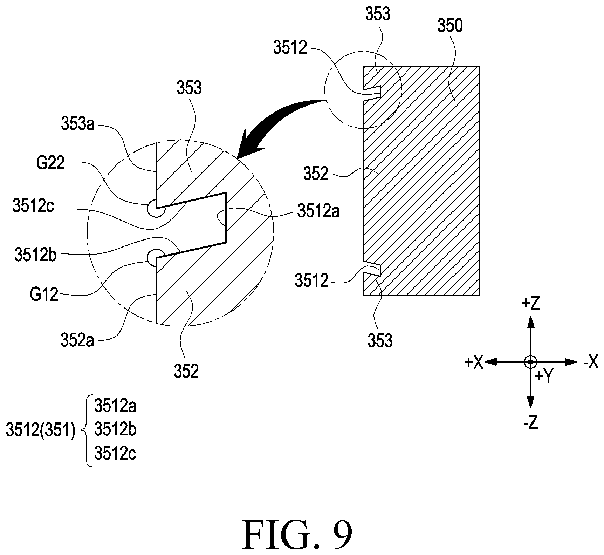

FIG. 9 is a cross-sectional view illustrating a second recess region of a guide rail according to an embodiment of the disclosure.

FIG. 9 is a cross-sectional view taken along line D-D' of FIG. 7.

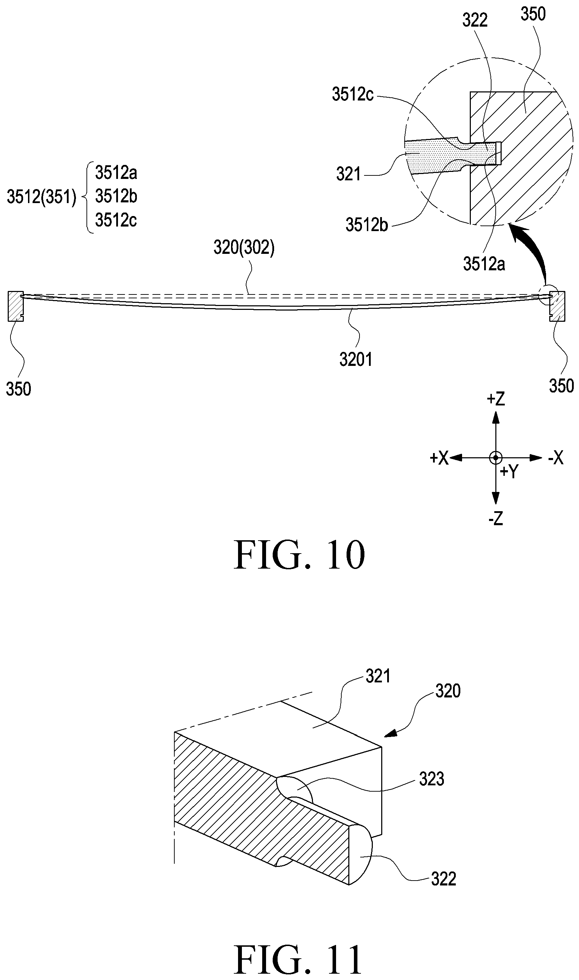

FIG. 10 is a plan view illustrating a guide rail and a multi-bar structure according to an embodiment of the disclosure.

The embodiments of FIGS. 7 to 10 may be combined with the embodiments of FIGS. 1 to 6 or the embodiments of FIGS. 11 to 16.

Referring to FIGS. 7 to 10, an electronic device (e.g., the electronic device 101 of FIG. 1, or the electronic device 101 of FIGS. 2 to 6) may include a guide rail 350 or a multi-bar structure 302.

The configuration of the guide rail 350 of FIGS. 7 to 10 may be identical in whole or part to the configuration of the guide rail 250 of FIG. 4. The configuration of the multi-bar structure 302 of FIGS. 7 to 10 may be identical in whole or part to the configuration of the multi-bar structure 232 of FIGS. 4 to 5B, or the configuration of the multi-bar structure 302 of FIG. 6.

According to an embodiment, the guide rail 350 of the electronic device 101 may be provided as a pair. Hereinafter, one guide rail 350 of the pair of guide rails 350 is described as an example, but the description thereof may be equally applied and/or analogously applied to the other guide rail 350.

According to an embodiment, the multi-bar structure 302 may include a plurality of support bars 320. Hereinafter, for convenience of description, one support bar 320 of the plurality of support bars 320 is described as an example, but the description thereof may be equally applied to and/or understood with respect to other support bars 320.

According to an embodiment (e.g., see FIG. 10), the support bar 320 may include a body portion 321 or a guide portion 322. The body portion 321 may extend lengthwise along a width direction (e.g., the X-axis direction of FIGS. 2 to 7) of the electronic device 101. For example, the body portion 321 may have a bar shape. The body portion 321 may be configured to support at least a portion of the display 330. For example, the body portion 321 may be configured to support an inner surface of the second display area A2. The guide portion 322 may be formed at opposite ends of the body portion 321. For example, the guide portion 322 may be provided as a pair protruding from the opposite ends of the body portion 321. Each of the pair of guide portions 322 may be inserted or received in the recess 351 formed in each of the pair of guide rails 350. For example, the support bar 320 may slide along the recess 351 as the guide portion 322 is inserted in the recess 351.

According to an embodiment, the guide rail 350 may include an inner portion 352 (e.g., the inner portion 252 of FIG. 4), an outer portion 353 (e.g., the outer portion 253 of FIG. 4), or a recess 351 (e.g., the slit 251 of FIG. 4).

According to an embodiment, the inner portion 352 of the guide rail 350 may be a portion forming an inner side among a body of the guide rail 350. The outer portion 353 of the guide rail 350 may be a portion forming an outer side among the body of the guide rail 350. For example, the outer portion 353 of the guide rail 350 may be provided in a shape surrounding the inner portion 352 of the guide rail 350.

According to an embodiment, the recess 351 of the guide rail 350 may be defined by the outer portion 353 and the inner portion 352. For example, the recess 351 may be a space formed between the outer portion 353 and the inner portion 352. The recess 351 may be formed by being recessed in the inner surface (e.g., a surface facing the +X direction of FIGS. 7 to 9) of the guide rail 350.

According to an embodiment, at least a portion of the multi-bar structure 302 may be inserted in the recess 351. For example, at least a portion of the multi-bar structure 302 may be inserted in the recess 351. The multi-bar structure 302 may slide along the recess 351 based on a slide movement of the second housing portion 202.

According to an embodiment, the recess 351 may be continuously formed over a flat section 350A, 350B and a bending section 350C. The flat section 350A, 350B may be defined as a section where at least a portion of the display 330 forms a flat surface. For example, the flat section 350A, 350B may include a first flat section 350A or a second flat section 350B. At least a portion of the display 330 corresponding to the first flat section 350A may be exposed to an exterior of the housing 210. For example, at least a portion of the display 330 corresponding to the first flat section 350A may be exposed to a front side of the housing 210. A portion of the display 330 corresponding to the second flat section 350B may be stored inside the housing 210.

According to an embodiment, at least a portion of the display 330 corresponding to the bending section 350C may be bent. For example, at least a portion of the display 330 corresponding to the bending section 350C may be supported by the curved surface 213a of the frame 213 and may be deformed into a curved shape by the curved surface 213a. At least a portion of the display 330 corresponding to the bending section 350C may be exposed to an exterior of the housing 210 together with the display 330 located on the first flat section 350A. At least a portion of the display 330 corresponding to the bending section 350C may be stored inside the housing 210 together with the display 330 located on the second flat section 350B. The bending section 350C may be defined and/or referred to as a rolling section.

According to an embodiment, the display 330 on the first flat section 350A or the second flat section 350B may be in a flat form, and a force such as the repulsive force acting in the bending section 350C may not act thereon.

According to an embodiment, the display 330 on the bending section 350C may be in a curved form, and the repulsive force may act in a direction away from the curved surface 213a (e.g., the second direction R2). For example, the display 330 on the bending section 350C may experience the repulsive force acting in the second direction R2 from the inner surface of the display 330 toward the outer surface of the display 330. To limit or reduce deformation of the display 330 due to the repulsive force on the bending section 350C, the guide rail 350 may provide a force to the multi-bar structure 302 that offsets the repulsive force. For example, the multi-bar structure 302 moving along the recess 351 of the bending section 350C may receive a force in a direction toward the curved surface 213a (e.g., the first direction R1). For example, the multi-bar structure 302 on the bending section 350C may experience a force acting in the first direction R1 from the outer surface of the display 330 toward the inner surface of the display 330. The multi-bar structure 302 may be adhered to the inner surface of the display 330, and the force in the first direction R1 may be transmitted to the display 330. Accordingly, the repulsive force in the second direction R2 acting on the display 330 may be offset by the force in the first direction R1 applied to the multi-bar structure 302.

According to an embodiment, the recess 351 may include a first recess 3511 formed on the flat section 350A, 350B, or a second recess 3512 formed on the bending section 350C.

According to an embodiment, the first recess 3511 may be formed on the first flat section 350A or the second flat section 350B. The first recess 3511 located at an upper portion of FIG. 8 may be the first recess 3511 formed on the first flat section 350A, and the first recess 3511 located at a lower portion of FIG. 8 may be the first recess 3511 formed on the second flat section 350B. Hereinafter, the description of the first recess 3511 located at the upper portion of FIG. 8 may be equally applied to and/or understood with respect to the first recess 3511 located at the lower portion of FIG. 8.

According to an embodiment, the first recess 3511 may be formed by being recessed in the inner surface (e.g., the surface facing the +X direction of FIG. 8) of the guide rail 350. For example, the first recess 3511 may be recessed from the inner surface of the guide rail 350 toward an outer surface (e.g., a surface facing the -X direction of FIG. 8) of the guide rail 350. At least a portion of the multi-bar structure 302 (e.g., the guide portion 322) may be inserted or received in the first recess 3511.

According to an embodiment, the first recess 3511 may include a first base surface 3511a, a first vertical surface 3511b, or a second vertical surface 3511c. For example, the first recess 3511 may be a space defined by (or surrounded by) the first base surface 3511a, the first vertical surface 3511b, and the second vertical surface 3511c. The first base surface 3511a, the first vertical surface 3511b, or the second vertical surface 3511c may face or contact the guide portion 322 of the support bar 320.

According to an embodiment, the first base surface 3511a may be connected to the first vertical surface 3511b. The first base surface 3511a may be disposed substantially perpendicular to the first vertical surface 3511b. The first base surface 3511a may be connected to the second vertical surface 3511c. The first base surface 3511a may be disposed substantially perpendicular to the second vertical surface 3511c. The first base surface 3511a may be defined as a lower surface of the first recess 3511. The first base surface 3511a may be parallel to the inner surface (e.g., the surface facing the +X direction of FIG. 8) of the guide rail 350, or the outer surface (e.g., the surface facing the -X direction of FIG. 8) of the guide rail 350.

According to an embodiment, the first vertical surface 3511b may be connected to the first base surface 3511a. The first vertical surface 3511b may be disposed substantially perpendicular to the first base surface 3511a and may face the second vertical surface 3511c. The first vertical surface 3511b may be disposed parallel to the second vertical surface 3511c. The first vertical surface 3511b may be connected to an inner surface 352a of the inner portion 352 of the guide rail 350. The first vertical surface 3511b may be disposed substantially perpendicular to the inner surface 352a of the inner portion 352. The first vertical surface 3511b and the inner surface 352a of the inner portion 352 may form a first angle G11. The first angle G11 may be about 270 degrees, but the disclosure is not limited thereto. The first vertical surface 3511b may be defined as a side surface of the first recess 3511.

According to an embodiment, the second vertical surface 3511c may be connected to the first base surface 3511a. The second vertical surface 3511c may be disposed substantially perpendicular to the first base surface 3511a and may face the first vertical surface 3511b. The second vertical surface 3511c may be disposed parallel to the first vertical surface 3511b. The first vertical surface 3511b may be connected to an inner surface 353a of the outer portion 353 of the guide rail 350. The second vertical surface 3511c may be disposed substantially perpendicular to the inner surface 353a of the outer portion 353. The second vertical surface 3511c and the inner surface 353a of the outer portion 353 may form a second angle G21. The second angle G21 may be about 270 degrees, but the disclosure is not limited thereto. The second vertical surface 3511c may be defined as a side surface of the first recess 3511.

According to an embodiment, the guide portion 322 of the support bar 320 may be inserted or received in the first recess 3511. The support bars 320 of the multi-bar structure 302 located on the first flat section 350A or the second flat section 350B may be disposed or located in the first recess 3511. At least a portion of the display 330 located on the first flat section 350A or the second flat section 350B may be provided in a flat form. The first base surface 3511a, the first vertical surface 3511b, and/or the second vertical surface 3511c may contact the guide portion 322.

According to an embodiment, the second recess 3512 may be formed on the bending section 350C. The second recess 3512 located at an upper portion of FIG. 9 may be the second recess 3512 formed in a section of the bending section 350C connected to the first flat section 350A, and the second recess 3512 located at a lower portion of FIG. 9 may be the second recess 3512 formed in a section of the bending section 350C connected to the second flat section 350B. Hereinafter, the description of the second recess 3512 located at the upper portion of FIG. 9 may be equally applied to and/or understood with respect to the second recess 3512 located at the lower portion of FIG. 9.

According to an embodiment, the second recess 3512 may be formed by being recessed in the inner surface (e.g., the surface facing the +X direction of FIG. 9) of the guide rail 350. For example, the second recess 3512 may be recessed from the inner surface of the guide rail 350 toward the outer surface (e.g., the surface facing the -X direction of FIG. 9) of the guide rail 350. At least a portion of the multi-bar structure 302 (e.g., the guide portion 322) may be inserted or received in the second recess 3512.

According to an embodiment, the second recess 3512 may include a second base surface 3512a, a first inclined surface 3512b, or a second inclined surface 3512c. For example, the second recess 3512 may be a space defined by (or surrounded by) the second base surface 3512a, the first inclined surface 3512b, and the second inclined surface 3512c. The second base surface 3512a, the first inclined surface 3512b, or the second inclined surface 3512c may face or contact the guide portion 322 of the support bar 320.

According to an embodiment, the second base surface 3512a may be connected to the first inclined surface 3512b. The second base surface 3512a may be disposed to be inclined with respect to the first inclined surface 3512b. For example, the second base surface 3512a and the first inclined surface 3512b may form an obtuse angle. The second base surface 3512a may be connected to the second inclined surface 3512c. The second base surface 3512a may be disposed to be inclined with respect to the second inclined surface 3512c. The second base surface 3512a and the second inclined surface 3512c may form an acute angle. The second base surface 3512a may be defined as a lower surface of the second recess 3512. The second base surface 3512a may be parallel to the inner surface (e.g., the surface facing the +X direction of FIG. 9) of the guide rail 350, or the outer surface (e.g., the surface facing the -X direction of FIG. 9) of the guide rail 350.

According to an embodiment, the first inclined surface 3512b may be connected to the second base surface 3512a. The first inclined surface 3512b may be disposed to be inclined with respect to the second base surface 3512a. The first inclined surface 3512b and the second base surface 3512a may form an obtuse angle. The first inclined surface 3512b may be disposed parallel to the second inclined surface 3512c. The first inclined surface 3512b may be connected to the inner surface 352a of the inner portion 352 of the guide rail 350. The first inclined surface 3512b may be disposed to be inclined with respect to the inner surface 352a of the inner portion 352. The first inclined surface 3512b and the inner surface 352a of the inner portion 352 may form a third angle G12. The third angle G12 may be defined as an angle between a surface of the first inclined surface 3512b and a surface of the inner surface 352a of the inner portion 352. The third angle G12 may be an angle exceeding about 180 degrees and may be an angle less than about 270 degrees. For example, the third angle G12 may be formed in a range of about 262 degrees to about 270 degrees. The third angle G12 may be smaller than the first angle G11. The third angle G12 may be defined and/or referred to as a first inclination angle G12. The first inclined surface 3512b may be defined as a side surface of the second recess 3512.

According to an embodiment, the second inclined surface 3512c may be connected to the second base surface 3512a. The second inclined surface 3512c may be disposed to be inclined with respect to the second base surface 3512a. The second inclined surface 3512c and the second base surface 3512a may form an acute angle. The second inclined surface 3512c may be disposed parallel to the first inclined surface 3512b. The second inclined surface 3512c may be connected to the inner surface 353a of the outer portion 353 of the guide rail 350. The second inclined surface 3512c may be disposed to be inclined with respect to the inner surface 353a of the outer portion 353. The second inclined surface 3512c and the inner surface 353a of the outer portion 353 may form a fourth angle G22. The fourth angle G22 may be defined as an angle between a surface of the second inclined surface 3512c and a surface of the inner surface 353a of the outer portion 353. The fourth angle G22 may be an angle exceeding about 270 degrees and may be an angle less than about 360 degrees. For example, the fourth angle G22 may be formed in a range of about 270 degrees to about 278 degrees. The fourth angle G22 may be greater than the second angle G21. The fourth angle may be defined and/or referred to as a second inclination angle G22. The second inclined surface 3512c may be defined as a side surface of the second recess 3512.

According to an embodiment, the guide portion 322 of the support bar 320 may be inserted or received in the second recess 3512. The support bars 320 of the multi-bar structure 302 located on the bending section 350C may be disposed or located in the second recess 3512. At least a portion of the display 330 located on the bending section 350C may be provided in a curved form. The second base surface 3512a, the first inclined surface 3512b, and/or the second inclined surface 3512c may contact the guide portion 322.

According to an embodiment, at a boundary 35121 between the first flat section 350A and the bending section 350C, or at a boundary 35122 between the second flat section 350B and the bending section 350C, the first base surface 3511a may be connected to the second base surface 3512a. At the boundary 35121 between the first flat section 350A and the bending section 350C, or at the boundary 35122 between the second flat section 350B and the bending section 350C, the first vertical surface 3511b may be connected to the first inclined surface 3512b. At the boundaries 35121, 35122, the third angle G12 of the first inclined surface 3512b may be substantially the same as the first angle G11 of the first vertical surface 3511b. At the boundary 35121 between the first flat section 350A and the bending section 350C, or at the boundary 35122 between the second flat section 350B and the bending section 350C, the second vertical surface 3511c may be connected to the second inclined surface 3512c. At the boundaries 35121, 35122, the fourth angle G22 of the second inclined surface 3512c may be substantially the same as the second angle G21 of the second vertical surface 3511c.

According to an embodiment, the second recess 3512 may be connected to the first recess 3511. For example, respective surfaces 3512a, 3512b, 3512c of the second recess 3512 may be defined as extending from respective surfaces 3511a, 3511b, 3511c of the first recess 3511.

According to an embodiment, the second recess 3512 may be defined as extending from the first recess 3511 of the first flat section 350A, or extending from the first recess 3511 of the second flat section 350B. For example, the second recess 3512 may extend from the first recess 3511 of the first flat section 350A and may be connected to the first recess 3511 of the second flat section 350B. At least a portion of the second recess 3512 may be bent to correspond to a shape of the curved surface 213a of the frame 213 when viewed from a side of the electronic device 101.

FIG. 10 is a view illustrating one support bar 320 of the multi-bar structure 302 located on the bending section 350C of FIG. 7. The support bar 320 illustrated in FIG. 10 is the support bar 320 located in a portion of the bending section 350C connected to the first flat section 350A of the guide rail 350, and a state in which the support bar 320 is inserted in the second recess 3512 among the recess 351 of the guide rail 350 is illustrated. The description of the support bar 320 of FIG. 10 may be equally applied to and/or understood with respect to support bars 320 located at other positions of the bending section 350C.

According to an embodiment, the support bar 320 may be inserted in the second recess 3512 formed in each of the pair of guide rails 350. For example, the guide portion 322 of the support bar 320 may be inserted in the second recess 3512. At least a portion of the display 330 supported by the support bar 320 located in the second recess 3512 may experience the repulsive force acting in the second direction R2 from the inner surface to the outer surface of the display 330. The repulsive force acting on the display 330 may be transmitted to the support bar 320 attached to (or coupled to) at least a portion of the display 330 on which the repulsive force acts. By including inclined surfaces that are each inclined, in the second recess 3512 formed in the pair of guide rails 350 facing each other, opposite ends (or the pair of guide portions 322) of the support bar 320 may receive a twisting force within a predetermined range. For example, each of the first inclined surface 3512b and the second inclined surface 3512c may be in a state twisted (or inclined) within a predetermined range with respect to the first vertical surface 3511b and the second vertical surface 3511c, and the guide portion 322 may contact the first inclined surface 3512b and the second inclined surface 3512c such that a force twisting the guide portion 322 may be applied. The support bar 320, by the first inclined surface 3512b and the second inclined surface 3512c being provided as inclined surfaces inclined with respect to the inner surface of the guide rail 350, may receive a force in the first direction R1 from the outer surface of the display 330 toward the inner surface of the display 330 by the second recess 3512. The force in the first direction R1 may be applied as a force that bends the support bar 320 in the first direction R1. For example, if the display 330 is not attached to the support bar 320 located on the bending section 350C or the second recess 3512, the support bar 320 may be bent such that a central portion of the support bar 320 sags in the first direction R1, as illustrated in the configuration "3201", by the force in the first direction R1 provided from the second recess 3512. The support bar 320, by being attached to the display 330, may receive the repulsive force of the display 330, and the force in the first direction R1 may be offset against the repulsive force of the display 330. Accordingly, the support bar 320 may not be bent in the bending section 350C or the second recess 3512. Further, as the repulsive force acting on the display 330 is offset by the force in the first direction R1, the display 330 may be limited or decreased from being excessively deformed in a direction away from the curved surface 213a of the frame 213 in the bending section 350C. Accordingly, a quality of the visual image provided to a user may be enhanced, and damage to the display 330 may be prevented or decreased.

According to an embodiment, the repulsive force acting on the display 330 may act greatest at a center boundary 35123 of the bending section 350C. The center boundary 35123 of the bending section 350C may have a position corresponding to a center 350R of a radius of curvature of the curved surface 213a. The repulsive force acting on the display 330 may gradually increase from the boundary 35121 between the first flat section 350A and the bending section 350C to the center boundary 35123 of the bending section 350C, and may gradually increase from the boundary 35122 between the second flat section 350B and the bending section 350C to the center boundary 35123 of the bending section 350C. Corresponding to the gradually increasing repulsive force, the force in the first direction R1 applied to the support bar 320 may gradually increase. For example, the third angle G12 formed by the first inclined surface 3512b and the inner surface 352a of the inner portion 352 may gradually decrease from the boundary 35121 between the first flat section 350A and the bending section 350C to the center boundary 35123 of the bending section 350C. Further, the fourth angle G22 formed by the second inclined surface 3512c and the inner surface 353a of the outer portion 353 may gradually increase from the boundary 35121 between the first flat section 350A and the bending section 350C to the center boundary 35123 of the bending section 350C. Accordingly, while the support bar 320 moves from the boundary 35121 between the first flat section 350A and the bending section 350C to the center boundary 35123 of the bending section 350C, as the degree to which the first inclined surface 3512b and the second inclined surface 3512c are inclined gradually increases, the force in the first direction R1 applied to the support bar 320 may gradually increase. For example, the third angle G12 formed by the first inclined surface 3512b and the inner surface 352a of the inner portion 352 may gradually decrease from the boundary 35122 between the second flat section 350B and the bending section 350C to the center boundary 35123 of the bending section 350C. Further, the fourth angle G22 formed by the second inclined surface 3512c and the inner surface 353a of the outer portion 353 may gradually increase from the boundary 35122 between the second flat section 350B and the bending section 350C to the center boundary 35123 of the bending section 350C. Accordingly, while the support bar 320 moves from the boundary 35122 between the second flat section 350B and the bending section 350C to the center boundary 35123 of the bending section 350C, as the degree to which the first inclined surface 3512b and the second inclined surface 3512c are inclined gradually increases, the force in the first direction R1 applied to the support bar 320 may gradually increase. According to an embodiment, the third angle G12 may have a minimum value at the center boundary 35123 of the bending section 350C, and the fourth angle G22 may have a maximum value at the center boundary 35123 of the bending section 350C. For example, an inclination angle, where the at least one inclined surface 3512b, 3512c is inclined with respect to the inner surface of the guide rail 350, may gradually vary along a moving direction of the multi-bar structure 302.

According to an embodiment, when the display 330 is deformed into a curved shape in the bending section 350C, the radius of curvature of the display 330 may be about 2 mm to about 7 mm, but the disclosure is not limited thereto. At the center boundary 35123 of the bending section 350C, the minimum value of the third angle G12 may be about 262 degrees to about 266 degrees, but the disclosure is not limited thereto. At the center boundary 35123 of the bending section 350C, the maximum value of the fourth angle G22 may be about 274 degrees to about 278 degrees, but the disclosure is not limited thereto.

FIG. 11 is a cross-sectional perspective view illustrating a support bar according to an embodiment of the disclosure.

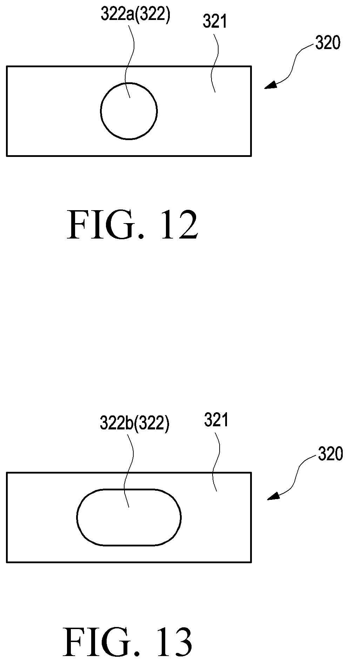

FIG. 12 is a side view illustrating a support bar according to an embodiment of the disclosure.

FIG. 13 is a side view illustrating a support bar according to an embodiment of the disclosure.

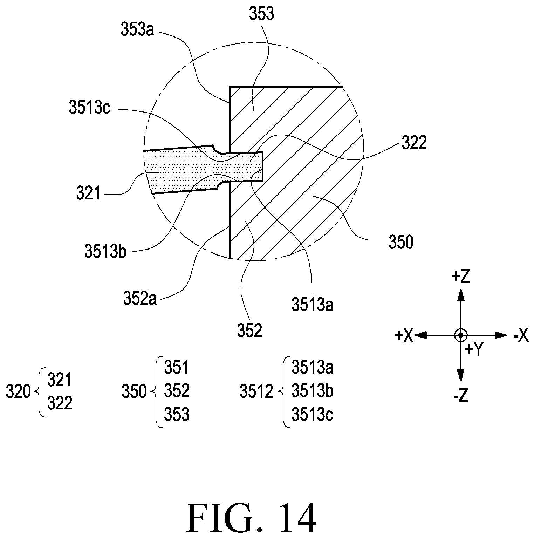

The embodiments of FIGS. 11 to 13 may be combined with the embodiments of FIGS. 1 to 10 or the embodiments of FIGS. 14 to 16.

Referring to FIGS. 11 to 13, the support bar 320 may include a body portion 321 or a guide portion 322.

The configuration of the support bar 320, the body portion 321, or the guide portion 322 of FIGS. 11 to 13 may be identical in whole or part to the configuration of the support bar 320, the body portion 321, or the guide portion 322 of FIGS. 7 to 10.

Referring to FIG. 11, the support bar 320 may further include a reinforcing portion 323 formed between the body portion 321 and the guide portion 322. The reinforcing portion 323 may be formed at a boundary between the body portion 321 and the guide portion 322. For example, the reinforcing portion 323 may be formed in a portion where the body portion 321 and the guide portion 322 are connected. The reinforcing portion 323 may enhance a coupling force between the body portion 321 and the guide portion 322. For example, the reinforcing portion 323 may have a size larger than that of the guide portion 322 and may have a size smaller than that of the body portion 321. The reinforcing portion 323 may limit or reduce damage to a coupled portion of the body portion 321 and the guide portion 322 when a twisting force is applied to the guide portion 322 of the support bar 320 by the first inclined surface 3512b and the second inclined surface 3512c. The reinforcing portion 323 may also be defined as a portion filled between the body portion 321 and the guide portion 322.

Referring to FIGS. 12 to 13, when viewed from a side of the support bar 320, the guide portion 322 may have various shapes. According to the illustrated embodiment, the guide portion 322 may be provided with a circular cross-sectional shape 322a or an elliptical cross-sectional shape 322b, but the disclosure is not limited thereto. The cross-sectional shape of the guide portion 322 may be modified into various shapes capable of moving on the first recess 3511 and the second recess 3512.

FIG. 14 is a cross-sectional view illustrating a guide rail and a support bar according to an embodiment of the disclosure.

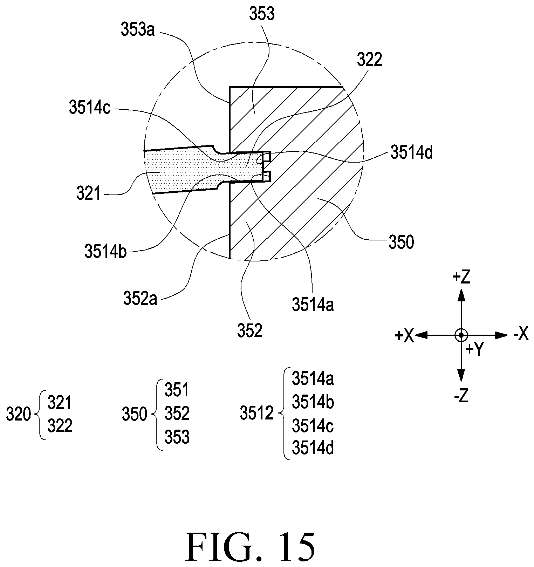

FIG. 15 is a cross-sectional view illustrating a guide rail and a support bar according to an embodiment of the disclosure.

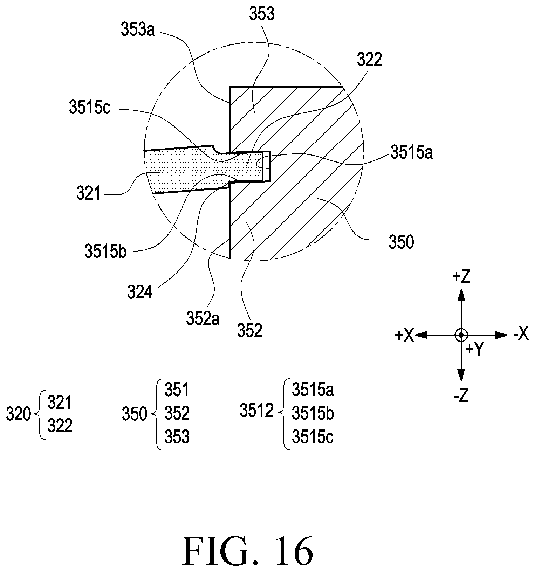

FIG. 16 is a cross-sectional view illustrating a guide rail and a support bar according to an embodiment of the disclosure.

The embodiments of FIGS. 14 to 16 may be combinable with the embodiments of FIGS. 1 to 13.

Referring to FIGS. 14 to 16, the second recess 3512 of the guide rail 350 and the guide portion 322 of the support bar 320 received in the second recess 3512 are illustrated. The guide rail 350 may include an inner portion 352, an outer portion 353, or a second recess 3512. The second recess 3512 may include a second base surface 3513a, 3514a, 3515a, a first inclined surface 3513b, 3514b, 3515b, or a second inclined surface 3513c, 3514c, 3515c. The support bar 320 may include a body portion 321 or a guide portion 322. The configuration of the guide rail 350, the inner portion 352, the outer portion 353, the second recess 3512, the second base surface 3513a, 3514a, 3515a, the first inclined surface 3513b, 3514b, 3515b, the second inclined surface 3513c, 3514c, 3515c, the support bar 320, the body portion 321, or the guide portion 322 of FIGS. 14 to 16 may be identical in whole or part to the configuration of the guide rail 350, the inner portion 352, the outer portion 353, the second recess 3512, the second base surface 3512a, the first inclined surface 3512b, the second inclined surface 3512c, the support bar 320, the body portion 321, or the guide portion 322 of FIGS. 6 to 10.

Referring to FIG. 14, the support bar 320 located on the bending section (e.g., the bending section 350C of FIG. 7) may be inserted in the second recess 3512. The guide portion 322 of the support bar 320 may be inserted in the second recess 3512 defined by the second base surface 3513a, the first inclined surface 3513b, and the second inclined surface 3513c. The second base surface 3513a may contact or tightly contact an end of the guide portion 322. For example, by the second base surface 3513a contacting the end of the guide portion 322, a predetermined gap may not be formed between the second base surface 3513a and the guide portion 322. For example, the guide portion 322 may be at least partially bent by contacting the first inclined surface 3513b formed to be inclined with respect to the inner surface 352a of the inner portion 352 and the second inclined surface 3513c formed to be inclined with respect to the inner surface 353a of the outer portion 353. For example, if a predetermined gap is created between the guide portion 322 and the second base surface 3513a, when opposite ends of the support bar 320 disposed between the pair of guide rails 350 are bent, the support bar 320 may experience unnecessary movement in a width direction (e.g., the X-axis direction of FIG. 14) of the electronic device 101. According to an embodiment, by the second base surface 3513a being provided in a structure that contacts the guide portion 322, a predetermined gap may not be formed between the opposite ends of the support bar 320 disposed between the pair of guide rails 350 and the second base surface 3513a. Accordingly, when the support bar 320 moves on the guide rail 350, movement in the width direction of the electronic device 101 may be limited or decreased.

Referring to FIG. 15, the support bar 320 located on the bending section 350C may be inserted in the second recess 3512. The guide portion 322 of the support bar 320 may be inserted in the second recess 3512 defined by the second base surface 3514a, the first inclined surface 3514b, and the second inclined surface 3514c. The guide rail 350 or the second recess 3512 may further include a protruding portion 3514d protruding from at least a portion of the second base surface 3514a. The protruding portion 3514d may protrude from the second base surface 3514a toward the guide portion 322 of the support bar 320. The protruding portion 3514d may contact or tightly contact an end of the guide portion 322. According to an embodiment, by the protruding portion 3514d being provided in a structure that contacts the guide portion 322, a predetermined gap may not be formed between the opposite ends of the support bar 320 disposed between the pair of guide rails 350 and the protruding portion 3514d. Accordingly, when the support bar 320 moves on the guide rail 350, movement in the width direction of the electronic device 101 may be limited or decreased.

Referring to FIG. 16, the support bar 320 located on the bending section 350C may be inserted in the second recess 3512. The guide portion 322 of the support bar 320 may be inserted in the second recess 3512 defined by the second base surface 3515a, the first inclined surface 3515b, and the second inclined surface 3515c. The support bar 320 may further include a stepped portion 324 formed between the body portion 321 and the guide portion 322. The stepped portion 324 may be formed in a portion where the body portion 321 and the guide portion 322 are connected. The stepped portion 324 may be a portion filled between the body portion 321 and the guide portion 322. For example, the stepped portion 324 may be formed to be stepped with respect to at least a portion of the guide portion 322 that contacts the first inclined surface 3514b. The stepped portion 324 may contact the inner surface 352a of the inner portion 352 of the guide rail 350 when the support bar 320 moves on the second recess 3512. Accordingly, a predetermined gap may not be formed between the stepped portion 324 of the support bar 320 disposed between the pair of guide rails 350 and the inner surface 352a of the inner portion 352. Accordingly, when the support bar 320 moves on the guide rail 350, movement in the width direction of the electronic device 101 may be limited or decreased.

An electronic device (e.g., a portable terminal) may include a display having a flat form, or a form having a flat surface and a curved surface. An electronic device including a display may have a limitation in implementing a screen larger than a size of the electronic device due to a fixed structure of the display. Accordingly, research has been conducted on electronic devices including a rollable display.

An electronic device with a rollable display may have its partial area extended or shrunken when slid.

The rollable display may be configured to be at least partially bent or unfolded when the slide operation of the electronic device is implemented. When the rollable display is at least partially bent, a portion of the rollable display may be deformed into a curved shape. When the rollable display is deformed into a curved shape, a repulsive force may act on the rollable display in a radial direction of the curved surface. The repulsive force may cause excessive deformation of the rollable display, and there is a concern that distortion of a visual image provided from the rollable display may be formed.

According to an embodiment of the disclosure, an electronic device including a multi-bar structure and a guide rail capable of providing a force that may offset the repulsive force applied to a flexible display may be provided.

However, a problem to be solved by the disclosure is not limited to the above-mentioned problem and may be variously determined within a scope not departing from the spirit and scope of the disclosure.

According to an embodiment of the disclosure, an electronic device may be provided that limits or reduces distortion of a visual image provided from a flexible display by limiting or reducing excessive deformation of the flexible display. Further, according to an embodiment of the disclosure, an electronic device capable of preventing or limiting damage to a flexible display may be provided.

Effects obtainable from the disclosure are not limited to the effects mentioned above, and other effects not mentioned are clearly understood by those skilled in the art to which the disclosure pertains from the following description.

According to an embodiment of the disclosure, an electronic device 101 may include a housing 210, a flexible display 330, a multi-bar structure 302, or a guide rail 350. The housing 210 may include a first housing portion 201 or a second housing portion 202. The second housing portion 202 may be configured to move between a retracted position and an extended position relative to the first housing portion 201. The flexible display 330 may be supported by the first housing portion 201 or the second housing portion 202. The multi-bar structure 302 may be configured to support at least a portion of the flexible display 330. The multi-bar structure 302 may be attached to the flexible display 330. The guide rail 350 may be disposed in the housing 210. The guide rail 350 may include a recess 351. The recess 351 may be recessed from an inner surface of the guide rail 350. The recess 351 may be configured to guide a movement of the multi-bar structure 302. At least a portion of the recess 351 may include at least one inclined surface 3512b, 3512c. The at least one inclined surface 3512b, 3512c may be inclined with respect to the inner surface of the guide rail 350. While the multi-bar structure 302 is located on the at least one inclined surface 3512b, 3512c, a force in a direction from an outer surface of the flexible display 330 toward an inner surface of the flexible display 330 may be configured to be applied to the multi-bar structure 302.

According to an embodiment, an inclination angle, where the at least one inclined surface 3512b, 3512c is inclined with respect to the inner surface of the guide rail 350, may gradually vary along a moving direction of the multi-bar structure 302.

According to an embodiment, the electronic device 101 may further include a frame 213. The frame 213 may include a curved surface 213a. The curved surface 213a may be configured to support the multi-bar structure 302 or the flexible display 330. The at least one inclined surface 3512b, 3512c may be formed in a portion of the recess 351 corresponding to the curved surface 213a.

According to an embodiment, the recess 351 may include a first recess 3511 or a second recess 3512. The second recess 3512 may extend from the first recess 3511. The first recess 3511 may include at least one vertical surface 3511b, 3511c. The at least one vertical surface 3511b, 3511c may be perpendicular to the inner surface of the guide rail 350. The second recess 3512 may include the at least one inclined surface 3512b, 3512c.

According to an embodiment, the first recess 3511 may include a first base surface 3511a, a first vertical surface 3511b, or a second vertical surface 3511c. The first vertical surface 3511b may be perpendicular to the first base surface 3511a. The second vertical surface 3511c may be perpendicular to the first base surface 3511a. The second vertical surface 3511c may face the first vertical surface 3511b. The second recess 3512 may include a second base surface 3512a, a first inclined surface 3512b, or a second inclined surface 3512c. The second base surface 3512a may be connected to the first base surface 3511a. The first inclined surface 3512b may be inclined with respect to the second base surface 3512a. The second inclined surface 3512c may be inclined with respect to the second base surface 3512a. The second inclined surface 3512c may face the first inclined surface 3512b.

According to an embodiment, the first inclined surface 3512b may be connected to the first vertical surface 3511b. The second inclined surface 3512c may be connected to the second vertical surface 3511c.

According to an embodiment, a first inclination angle G12, where the first inclined surface 3512b is inclined with respect to the inner surface of the guide rail 350, may be smaller than a second inclination angle G22, where the second inclined surface 3512c is inclined with respect to the inner surface of the guide rail 350.

According to an embodiment, the first inclination angle G12 between the first inclined surface 3512b and the inner surface of the guide rail 350 may gradually decrease along a direction away from the first recess 3511. The second inclination angle G22 between the second inclined surface 3512c and the inner surface of the guide rail 350 may gradually increase along a direction away from the first recess 3511.

According to an embodiment, the second base surface 3513a may contact an end of the multi-bar structure 302.

According to an embodiment, the second recess 3512 may further include a protruding portion 3514d. The protruding portion 3514d may protrude from the second base surface 3514a. The protruding portion 3514d may contact an end of the multi-bar structure 302.

According to an embodiment, the multi-bar structure 302 may include a plurality of support bars 320. At least one of the plurality of support bars 320 may be configured to move from the first recess 3511 toward the second recess 3512 as the second housing portion 202 is moved from the extended position to the retracted position.

According to an embodiment, each of the plurality of support bars 320 may include a body portion 321 or a guide portion 322. The body portion 321 may be attached to the inner surface of the flexible display 330. The guide portion 322 may protrude from an end of the body portion 321. The guide portion 322 may be inserted in at least one of the first recess 3511 or the second recess 3512.

According to an embodiment, each of the plurality of support bars 320 may further include a reinforcing portion 323. The reinforcing portion 323 may be formed in a position where the body portion 321 and the guide portion 322 are connected.

According to an embodiment, each of the plurality of support bars 320 may further include a stepped portion 324. The stepped portion 324 may be formed in a position where the body portion 321 and the guide portion 322 are connected. The stepped portion 324 may contact the inner surface of the guide rail 350 while the plurality of support bars 320 are located on the second recess 3512.

According to an embodiment, the guide rail 350 may further include an inner portion 352 or an outer portion 353. The outer portion 353 may be disposed outside of the inner portion 352. The recess 351 may be defined by the inner portion 352 and the outer portion 353.

According to an embodiment of the disclosure, an electronic device 101 may include a housing 210, a flexible display 330, a multi-bar structure 302, or a guide rail 350. The housing 210 may include a first housing portion 201 or a second housing portion 202. The second housing portion 202 may be configured to move between a retracted position and an extended position relative to the first housing portion 201. The flexible display 330 may be supported by the first housing portion 201 or the second housing portion 202. The multi-bar structure 302 may be configured to support at least a portion of the flexible display 330. The multi-bar structure 302 may include a plurality of support bars 320. The guide rail 350 may be disposed in the housing 210. The guide rail 350 may be configured to guide a movement of the plurality of support bars 320. The guide rail 350 may include a first recess 3511 or a second recess 3512. The second recess 3512 may extend from the first recess 3511. At least a portion of the second recess 3512 may be at least partially inclined with respect to at least a portion of the first recess 3511.

According to an embodiment, the electronic device 101 may further include a lattice plate 340. The lattice plate 340 may be disposed between the flexible display 330 and the multi-bar structure 302.

According to an embodiment, each of the plurality of support bars 320 may include a body portion 321 or a guide portion 322. The guide portion 322 may protrude from an end of the body portion 321. The guide portion 322 may be inserted in at least one of the first recess 3511 or the second recess 3512.

According to an embodiment, the second recess 3512 may include a base surface 3513a. The base surface 3513a may contact an end of the guide portion 322.

While the disclosure has been shown and described with reference to exemplary embodiments thereof, it will be apparent to those of ordinary skill in the art that various changes in form and detail may be made thereto without departing from the spirit and scope of the disclosure as defined by the following claims.

## Claims

1. An electronic device (101) comprising:
a housing (210) including a first housing portion (201) and a second housing portion (202), wherein the second housing portion (202) is configured to move between a retracted position and an extended position relative to the first housing portion (201);
a flexible display (330) supported by the first housing portion (201) and the second housing portion (202);
a multi-bar structure (302) configured to support at least a portion of the flexible display (330) and attached to the flexible display (330); and
a guide rail (350) disposed in the housing (210) and including a recess (351) recessed from an inner surface of the guide rail (350), wherein the recess (351) is configured to guide a movement of the multi-bar structure (302),
wherein at least a portion of the recess (351) includes at least one inclined surface (3512b, 3512c), which is inclined with respect to the inner surface of the guide rail (350), and
wherein a force in a direction from an outer surface of the flexible display (330) toward an inner surface of the flexible display (330) is configured to be applied to the multi-bar structure (302) while the multi-bar structure (302) is located on the at least one inclined surface (3512b, 3512c).

2. The electronic device of claim 1, wherein an inclination angle, at which the at least one inclined surface (3512b, 3512c) is inclined with respect to the inner surface of the guide rail (350), gradually varies along a moving direction of the multi-bar structure (302).

3. The electronic device of claim 1 or 2, further comprising a frame (213) including a curved surface (213a), which is configured to support the multi-bar structure (302) and the flexible display (330), and
wherein the at least one inclined surface (3512b, 3512c) is formed in a portion of the recess (351) corresponding to the curved surface (213a).

4. The electronic device of any one of claims 1 to 3, wherein the recess (351) includes a first recess (3511) and a second recess (3512) extended from the first recess (3511);
wherein the first recess (3511) includes at least one vertical surface (3511b, 3511c), which is perpendicular to the inner surface of the guide rail (350), and
wherein the second recess (3512) includes the at least one inclined surface (3512b, 3512c).

5. The electronic device of any one of claims 1 to 4, wherein the first recess (3511) includes:
a first base surface (3511a);
a first vertical surface (3511b) perpendicular to the first base surface (3511a); and
a second vertical surface (3511c) perpendicular to the first base surface (3511a) and facing the first vertical surface (3511b), and
wherein the second recess (3512) includes:
a second base surface (3512a) connected to the first base surface (3511a);
a first inclined surface (3512b) inclined with respect to the second base surface (3512a); and
a second inclined surface (3512c) inclined with respect to the second base surface (3512a) and facing the first inclined surface (3512b).

6. The electronic device of any one of claims 1 to 5, wherein the first inclined surface (3512b) is connected to the first vertical surface (3511b), and
wherein the second inclined surface (3512c) is connected to the second vertical surface (3511c).

7. The electronic device of any one of claims 1 to 6, wherein a first inclination angle (G12), at which the first inclined surface (3512b) is inclined with respect to the inner surface of the guide rail (350), is smaller than a second inclination angle (G22), at which the second inclined surface (3512c) is inclined with respect to the inner surface of the guide rail (350).

8. The electronic device of any one of claims 1 to 7, wherein the first inclination angle (G12) between the first inclined surface (3512b) and the inner surface of the guide rail (350) gradually decreases along a direction away from the first recess (3511), and
wherein the second inclination angle (G22) between the second inclined surface (3512c) and the inner surface of the guide rail (350) gradually increases along the direction away from the first recess (3511).

9. The electronic device of any one of claims 1 to 8, wherein the second base surface (3513a) contacts an end of the multi-bar structure (302).

10. The electronic device of any one of claims 1 to 9, wherein the second recess (3512) further includes a protruding portion (3514d), which protrudes from the second base surface (3514a) and contacts an end of the multi-bar structure (302).

11. The electronic device of any one of claims 1 to 10, wherein the multi-bar structure (302) includes a plurality of support bars (320), and
wherein at least one of the plurality of support bars (320) is configured to move from the first recess (3511) toward the second recess (3512) as the second housing portion (202) is moved from the extended position to the retracted position.

12. The electronic device of any one of claims 1 to 11, wherein each of the plurality of support bars (320) includes:
a body portion (321) attached to the inner surface of the flexible display (330), and
a guide portion (322) protruding from an end of the body portion (321) and inserted in at least one of the first recess (3511) or the second recess (3512).

13. The electronic device of any one of claims 1 to 12, wherein each of the plurality of support bars (320) further includes a reinforcing portion (323) formed in a position where the body portion (321) and the guide portion (322) are connected.

14. The electronic device of any one of claims 1 to 13, wherein each of the plurality of support bars (320) further includes a stepped portion (324) formed in a position where the body portion (321) and the guide portion (322) are connected, and
wherein the stepped portion (324) contacts the inner surface of the guide rail (350) while the plurality of support bars (320) are located on the second recess (3512).

15. The electronic device of any one of claims 1 to 14, wherein the guide rail (350) further includes an inner portion (352) and an outer portion (353) disposed outside of the inner portion (352), and
wherein the recess (351) is defined by the inner portion (352) and the outer portion (353).
